# EUROPEAN PATENT APPLICATION

(11) **EP 4 694 317 A1**
(43) Date of publication of application: **11.02.2026**
(21) Application number: 24784186.9
(22) Date of filing: 29.03.2024
(51) Int. Cl.: H04W 28/10

(54) **CONGESTION INFORMATION OPERATION METHOD AND APPARATUS AND COMMUNICATION DEVICE**

(30) Priority: 04.04.2023 CN 202310362614
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Walaski, Jan Filip
(86) International application number: PCT/CN2024/084880
(87) International publication number: WO 2024/208101

(57) **Abstract**

Embodiments of the present application provide a congestion information operation method, comprising: a first communication device acquires first information, wherein the first information comprises first requirement information used for requiring monitoring of congestion; the first communication device reports first congestion information or second congestion information on the basis of the first information, wherein the first congestion information is information used for describing a congestion situation, and the second congestion information is information used for describing a data packet requiring congestion marking.

## Description

### CROSS-REFERENCE TO RELATED APPLICATIONS

This application claims priority to Chinese Patent Application No. 202310362614.3, filed in China on April 4, 2023, which is incorporated herein by reference in its entirety.

### TECHNICAL FIELD

This application pertains to the field of wireless communication technologies and specifically relates to a congestion information manipulation method and apparatus, and a communication device.

### BACKGROUND

In a 5G system (5G System, 5GS), the following two methods for congestion information exposure may be supported. Method 1: A radio access network (Radio Access Network, RAN) monitors a congestion situation and sends a percentage of congestion level to a user plane function (User Plane Function, UPF) via a user plane. Then, the UPF discloses the percentage of congestion level through a service-oriented interface or an N4 interface. Method 2: A RAN monitors a congestion situation and sends a percentage of data packets marked with congestion to a UPF via a user plane. Then, the UPF sets, based on the received congestion information, congestion marks on the corresponding percentage of data packets in a congestion direction.

In these two methods, the percentages reported to the UPF have different meanings. However, the RAN receives only an indication and thus cannot determine whether to report a percentage for describing the congestion situation information or a percentage for describing data packets requiring congestion marking. In addition, the user plane function also cannot determine how to process the reported congestion-related information such as percentage information of the congestion level.

### SUMMARY

Embodiments of this application provide a congestion information manipulation method and apparatus, and a communication device, so as to resolve the problems of reporting and processing of congestion-related information.

To solve the above technical problems, this application is implemented as follows.

According to a first aspect, a congestion information manipulation method is provided, including: acquiring, by a first communication device, first information, where the first information includes first request information for requesting monitoring of congestion; and reporting, by the first communication device, first congestion information or second congestion information based on the first information, where the first congestion information is information for describing a congestion situation, and the second congestion information is information for describing data packets requiring congestion marking.

According to a second aspect, a congestion information manipulation method is provided, including: receiving, by a second communication device, first congestion information or second congestion information, where the first congestion information is information for describing a congestion situation, and the second congestion information is information for describing data packets requiring congestion marking; and performing, by the second communication device, at least one of the following: performing the first congestion information exposure or performing congestion marking for data packets based on the second congestion information; and ignoring the received first congestion information or ignoring the received second congestion information.

According to a third aspect, a congestion information manipulation method is provided, including: acquiring, by a first communication device, first information, where the first information includes first request information for requesting monitoring of congestion; and reporting, by the first communication device, third congestion information based on the first information, where the third congestion information is percentage information corresponding to congestion information.

According to a fourth aspect, a congestion information manipulation method is provided, including: receiving, by a second communication device, third congestion information, where the third congestion information is percentage information corresponding to congestion information; and interpreting, by the second communication device, the third congestion information as one of the following: information for describing a congestion situation and a percentage of data packets requiring congestion marking in all data packets.

According to a fifth aspect, a congestion information manipulation method is provided, including: performing, by a third communication device, a third operation, where the third operation includes at least one of the following: sending first information to a first communication device, where the first information includes at least one of the following: first request information for requesting monitoring of congestion and third information; where the third information is used for requesting reporting of one of the following: information of a congestion situation and information of data packets requiring congestion marking; and sending fourth information to a second communication device, where the fourth information includes at least one of the following: second request information for requesting monitoring of congestion, information for requesting exposure of congestion information, and information for requesting a congestion marking operation for data packets.

According to a sixth aspect, a congestion information manipulation method is provided, including: performing, by a fourth communication device, a fourth operation, where the fourth operation includes at least one of the following: sending fifth information to a third communication device, where the fifth information includes at least one of the following: information for requesting monitoring of congestion, where a purpose of the monitoring congestion includes at least one of the following: performing congestion information exposure and performing a congestion marking operation for data packets; information for requesting monitoring of first congestion, where a purpose of the monitoring first congestion includes performing congestion information exposure; and information for requesting monitoring of second congestion, where a purpose of the monitoring second congestion includes performing a congestion marking operation for data packets.

According to a seventh aspect, a congestion information manipulation apparatus is provided, including: a first acquisition module, configured to acquire first information, where the first information includes first request information for requesting monitoring of congestion; and a first reporting module, configured to report first congestion information or second congestion information based on the first information, where the first congestion information is information for describing a congestion situation, and the second congestion information is information for describing data packets requiring congestion marking.

According to an eighth aspect, a congestion information manipulation apparatus is provided, including: a first receiving module, configured to receive first congestion information or second congestion information, where the first congestion information is information for describing a congestion situation, and the second congestion information is information for describing data packets requiring congestion marking; and a first execution module, configured to perform at least one of the following: performing the first congestion information exposure or performing congestion marking for data packets based on the second congestion information; and ignoring the received first congestion information or ignoring the received second congestion information.

According to a ninth aspect, a congestion information manipulation apparatus is provided, including: a second acquisition module, configured to acquire first information, where the first information includes first request information for requesting monitoring of congestion; and a second reporting module, configured to report third congestion information based on the first information, where the third congestion information is percentage information corresponding to congestion information.

According to a tenth aspect, a congestion information manipulation apparatus is provided, including: a second receiving module, configured to receive third congestion information, where the third congestion information is percentage information corresponding to congestion information; and a first determining module, configured to interpret the third congestion information as one of the following: information for describing a congestion situation and a percentage of data packets requiring congestion marking in all data packets.

According to an eleventh aspect, a congestion information manipulation apparatus is provided, including: a second execution module, configured to perform a third operation, where the third operation includes at least one of the following: sending first information to a first communication device, where the first information includes at least one of the following: first request information for requesting monitoring of congestion and third information, where the third information is used for requesting reporting of one of the following: information of a congestion situation and information of data packets requiring congestion marking; and sending fourth information to a second communication device, where the fourth information includes at least one of the following: second request information for requesting monitoring of congestion, information for requesting exposure of congestion information, and information for requesting a congestion marking operation for data packets.

According to a twelfth aspect, a congestion information manipulation apparatus is provided, including: a third execution module, configured to perform a fourth operation, where the fourth operation includes at least one of the following: sending fifth information to a third communication device, where the fifth information includes at least one of the following: information for requesting monitoring of congestion, where a purpose of the monitoring congestion includes at least one of the following: performing congestion information exposure and performing a congestion marking operation for data packets; information for requesting monitoring of first congestion, where a purpose of the monitoring first congestion includes performing congestion information exposure; and information for requesting monitoring of second congestion, where a purpose of the monitoring second congestion includes performing a congestion marking operation for data packets.

According to a thirteenth aspect, a network-side device is provided. The network-side device includes a processor and a memory, where the memory stores a program or instructions capable of running on the processor, and when the program or instructions are executed by the processor, the steps of the method according to the first aspect are implemented, or the steps of the method according to the second aspect are implemented, the steps of the method according to the third aspect are implemented, the steps of the method according to the fourth aspect are implemented, or the steps of the method according to the fifth aspect are implemented, or the steps of the method according to the sixth aspect are implemented.

According to a fourteenth aspect, a readable storage medium is provided, where the readable storage medium stores a program or instructions, and when the program or instructions are executed by a processor, the steps of the method according to the first aspect are implemented, or the steps of the method according to the second aspect are implemented, or the steps of the method according to the third aspect are implemented, or the steps of the method according to the fourth aspect are implemented, or the steps of the method according to the fifth aspect are implemented, or the steps of the method according to the sixth aspect are implemented.

According to a fifteenth aspect, a chip is provided. The chip includes a processor and a communication interface, where the communication interface is coupled to the processor, and the processor is configured to execute a program or instructions to implement the steps of the method according to the first aspect, or the steps of the method according to the second aspect, or the steps of the method according to the third aspect, or the steps of the method according to the fourth aspect, or the steps of the method according to the fifth aspect, or the steps of the method according to the sixth aspect.

According to a sixteenth aspect, a computer program or a program product is provided, where the computer program or the program product is stored in a non-volatile storage medium, and the program or the program product is executed by at least one processor to implement the steps of the method according to the first aspect, or the steps of the method according to the second aspect, or the steps of the method according to the third aspect, or the steps of the method according to the fourth aspect, or the steps of the method according to the fifth aspect, or the steps of the method according to the sixth aspect.

In embodiments of this application, a first communication device acquires first information and reports, based on the first information, first congestion information for describing a congestion situation or second congestion information for describing data packets requiring congestion marking, enabling the first communication device to determine to report the first congestion information or the second congestion information, thereby enabling a receiving terminal to know a purpose of the first communication device in reporting congestion information and thus perform corresponding processing.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. Moreover, throughout the accompanying drawings, the same reference signs represent the same components. In the accompanying drawings:
FIG. 1 is a block diagram of a wireless communication system to which embodiments of this application are applicable;
FIG. 2 shows a method for performing congestion information exposure in related art;
FIG. 3 shows another method for performing congestion information exposure in related art;
FIG. 4 is a schematic flowchart of a congestion information manipulation method according to an embodiment of this application;
FIG. 5 is a schematic flowchart of a congestion information manipulation method according to an embodiment of this application;
FIG. 6 is a schematic flowchart of a congestion information manipulation method according to an embodiment of this application;
FIG. 7 is a schematic flowchart of a congestion information manipulation method according to an embodiment of this application;
FIG. 8 is a schematic flowchart of a congestion information manipulation method according to an embodiment of this application;
FIG. 9 is a schematic flowchart of a congestion information manipulation method according to an embodiment of this application;
FIG. 10 is a schematic flowchart of a congestion information manipulation method according to an embodiment of this application;
FIG. 11 is a schematic flowchart of a congestion information manipulation method according to an embodiment of this application;
FIG. 12 is a schematic flowchart of a congestion information manipulation method according to an embodiment of this application;
FIG. 13 is a schematic flowchart of a congestion information manipulation method according to an embodiment of this application;
FIG. 14 is a schematic flowchart of a congestion information manipulation method according to an embodiment of this application;
FIG. 15 is a schematic flowchart of a congestion information manipulation method according to an embodiment of this application;
FIG. 16 is a schematic flowchart of a congestion information manipulation method according to an embodiment of this application;
FIG. 17 is a schematic flowchart of a congestion information manipulation method according to an embodiment of this application;
FIG. 18 is a schematic structural diagram of a congestion information manipulation apparatus according to an embodiment of this application;

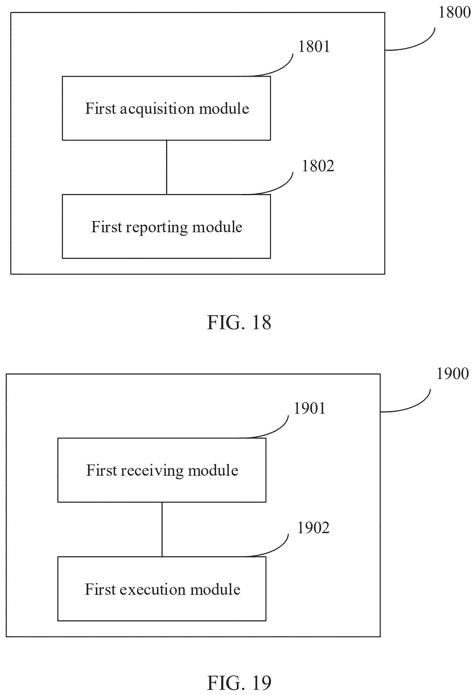

FIG. 18 is a schematic structural diagram of a congestion information manipulation apparatus according to an embodiment of this application;
FIG. 19 is a schematic structural diagram of a congestion information manipulation apparatus according to an embodiment of this application;

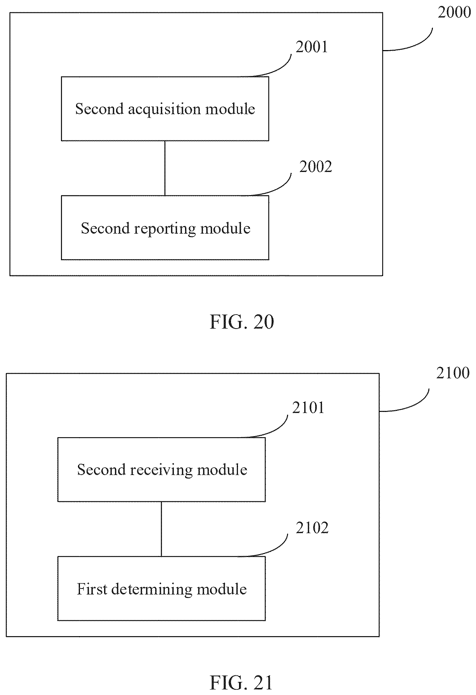

FIG. 20 is a schematic structural diagram of a congestion information manipulation apparatus according to an embodiment of this application;
FIG. 21 is a schematic structural diagram of a congestion information manipulation apparatus according to an embodiment of this application;

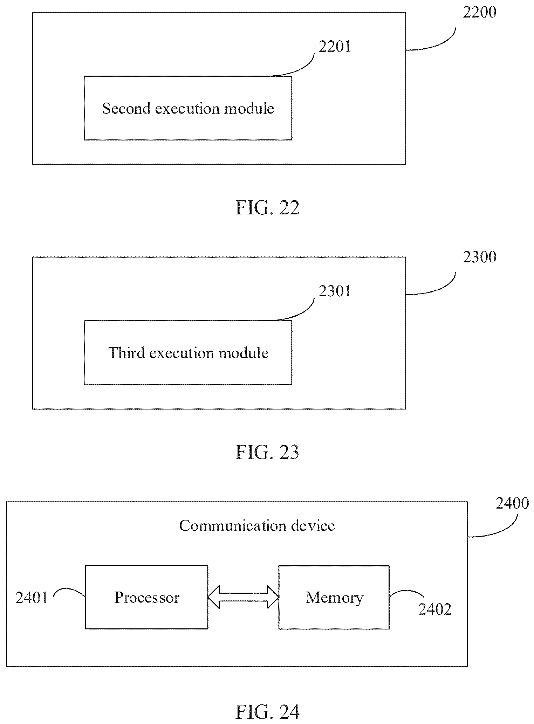

FIG. 22 is a schematic structural diagram of a congestion information manipulation apparatus according to an embodiment of this application;
FIG. 23 is a schematic structural diagram of a congestion information manipulation apparatus according to an embodiment of this application;
FIG. 24 is a schematic structural diagram of a communication device according to an embodiment of this application; and

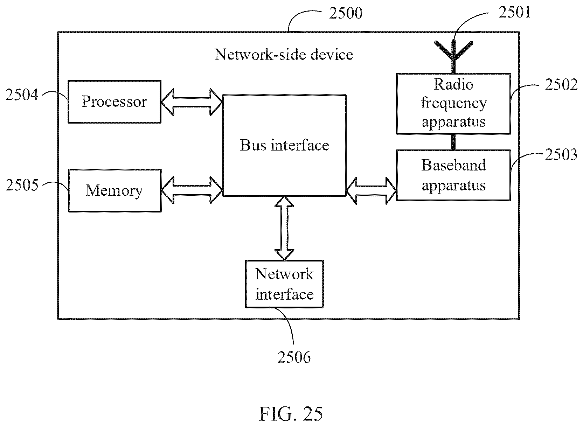

FIG. 25 is a schematic diagram of a hardware structure of a network-side device according to an embodiment of this application.

### DESCRIPTION OF EMBODIMENTS

The following clearly and thoroughly describes the technical solution in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application without creative efforts fall within the protection scope of this application.

Terms "include", "comprise", and any other variants thereof in the specification and claims of the application are intended to cover the non-exclusive inclusion. For example, a process, method, system, product, or device that includes a series of steps or units is not necessarily limited to those expressly listed steps or units, but may include other steps or units not expressly listed or inherent to such process, method, system, product, or device. Moreover, use of "and/or" in the specification and claims represents at least one of the connected objects. For example, A and/or B means three cases: A alone, B alone, or both A and B.

In the embodiments of this application, the word such as "an example" or "for example" is used to represent giving an example, an instance, or an illustration. Any embodiment or design solution described as "an example" or "for example" in the embodiments of this application shall not be interpreted to be more preferential or advantageous than other embodiments or design solutions. Exactly, use of the word "exemplary" or "for example" or the like is intended to present a related concept in a specific manner.

Technologies described in this specification are not limited to a 5th-generation mobile communication technology (5th-generation, 5G) system, a later evolved communications system, and an LTE/LTE advanced (LTE-Advanced, LTE-A) system, and may also be applied to various wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems.

The terms "system" and "network" are usually used interchangeably. The CDMA system can implement radio technologies such as CDMA2000 and universal terrestrial radio access (Universal Terrestrial Radio Access, UTRA). The UTRA includes wideband CDMA (Wideband Code Division Multiple Access, WCDMA) and other CDMA variants. The TDMA system can implement radio technologies such as the global system for mobile communication (Global System for Mobile Communication, GSM). The OFDMA system may implement radio technologies such as ultra mobile broadband (Ultra Mobile Broadband, UMB), evolved UTRA (Evolution-UTRA, E-UTRA), IEEE 802.11 (Wi-Fi), IEEE 802.16 (WiMAX), IEEE 802.20, and Flash-OFDM. The UTRA and E-UTRA are parts of the universal mobile telecommunications system (Universal Mobile Telecommunications System, UMTS). The LTE and more advanced LTE (such as LTE-A) are new UMTS releases that use the E-UTRA. UTRA, E-UTRA, UMTS, LTE, LTE-A, and GSM are described in documents from an organization named "3rd Generation Partnership Project" (3rd Generation Partnership Project, 3GPP). CDMA2000 and UMB are described in documents from an organization named "3rd Generation Partnership Project 2" (3GPP2). The technologies described may be used in the above-mentioned systems and radio technologies as well as other systems and radio technologies.

Optionally, acquiring may be understood as acquiring from configuration, receiving, acquiring through receiving upon a request, acquiring through self-learning, acquiring through deduction based on non-received information, or acquiring through processing received information, which may be determined according to actual needs. This is not limited in the embodiments of this application. For example, when specific capability indication information sent by a device is not received, it can be deduced that the device does not support the capability.

Optionally, sending may include broadcasting, broadcasting through a system message, or returning a response after receiving the request.

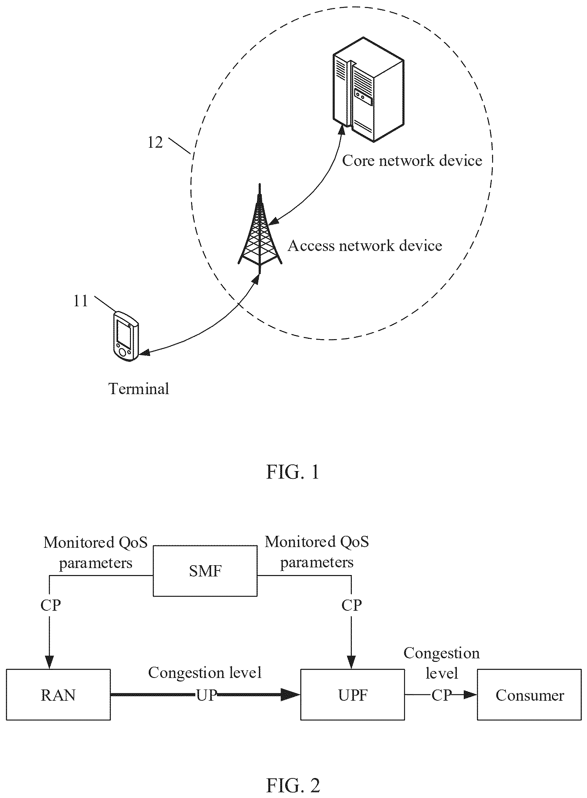

FIG. 1 is a block diagram of a wireless communication system to which embodiments of this application are applicable. The wireless communication system includes a terminal 11 and a communication device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (Augmented Reality, AR), a virtual reality (Virtual Reality, VR) device, a robot, a wearable device (Wearable Device), a flight vehicle (flight vehicle), vehicle user equipment (Vehicle User Equipment, VUE), ship-borne equipment, pedestrian user equipment (Pedestrian User Equipment, PUE), a smart home device (a home device with a wireless communication function, for example, a refrigerator, a television, a washing machine, or furniture), a gaming console, a personal computer (Personal Computer, PC), an automated teller machine or a self-service machine, or other terminal-side devices. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, and the like. The vehicle user equipment may also be referred to as a vehicle terminal, a vehicle controller, a vehicle module, a vehicle component, a vehicle chip, or a vehicle unit. It should be noted that the specific type of the terminal 11 is not limited in the embodiments of this application. The network-side device 12 may include an access network device or a core network device, where the access network device may also be referred to as a radio access network (Radio Access Network, RAN) device, a radio access network function, or a radio access network unit. The access network device may include a base station, a wireless local area network (Wireless Local Area Network, WLAN) access point (Access Point, AS), or a wireless fidelity (Wireless Fidelity, WiFi) node. The base station may be referred to as a Node B (Node B), an evolved Node B (Evolved Node B, eNB), the next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home Node B (home Node B, HNB), a home evolved Node B (home evolved Node B), a transmission reception point (Transmission Reception Point, TRP), or another appropriate term in the art. Provided that the same technical effects are achieved, the base station is not limited to any specific technical term. It should be noted that in the embodiments of this application, only the base station in the NR system is used as an example for description, and the specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (local NEF or L-NEF), a binding support function (Binding Support Function, BSF), an application function (Application Function, AF), and the like. It should be noted that in the embodiments of this application, only the core network device in the NR system is introduced as an example, and the specific type of the core network device is not limited.

To better understand the technical solutions provided by this application, the technologies involved in this application are first introduced.

In a 5G system (5G System, 5GS), the following two methods for performing congestion information exposure may be supported.

FIG. 2 shows a method for performing congestion information exposure in related art. The method includes: a radio access network (Radio Access Network, RAN) monitors a congestion situation and sends a percentage of congestion level to a user plane function (User Plane Function, UPF) via a user plane. Then, the UPF discloses the percentage of congestion level through a service-oriented interface or an N4 interface.

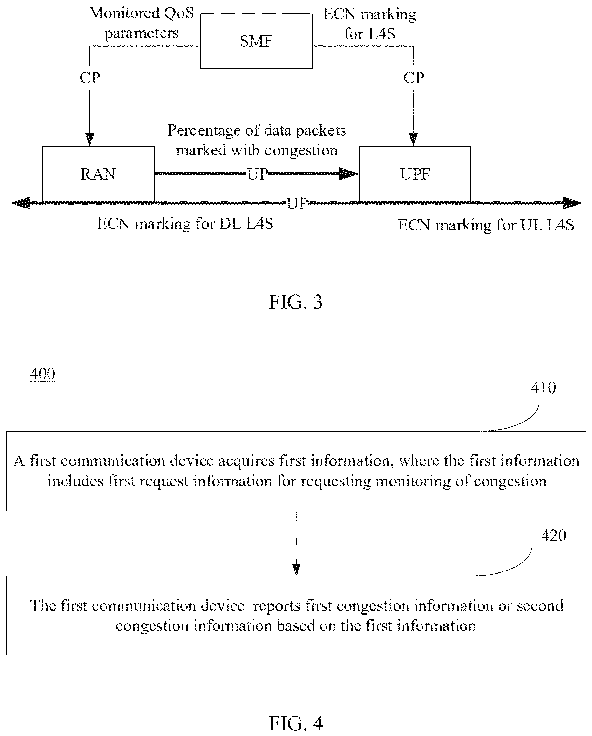

FIG. 3 shows another method for performing congestion information exposure in related art. The method includes: a RAN monitors a congestion situation and sends a percentage of data packets marked with congestion to a UPF via a user plane. Then, the UPF sets, based on the received congestion information, congestion marks on the corresponding percentage of data packets in a congestion direction.

In the methods shown in FIG. 2 and FIG. 3, the percentages reported to the UPF have different meanings. However, the RAN receives only an indication, for example, including a quality of service (Quality of Service, QoS) parameter for monitoring congestion information. Therefore, the RAN cannot determine when to report a percentage of congestion level or a percentage of data packets marked with congestion. The UPF cannot understand whether the percentage is the percentage of congestion level or the percentage of data packets marked with congestion, and thus the UPF also cannot perform corresponding processing operations.

Based on this, this application proposes a congestion information manipulation method and apparatus, and a communication device. The following describes in detail the congestion information manipulation method provided in embodiments of this application through some embodiments and application scenarios thereof with reference to the accompanying drawings.

The specific implementation terms in this application are first described and conceptually explained.

In an embodiment of this application, reporting or report indicates one of the following: notification and sending.

In an embodiment of this application, monitoring (such as monitor) is required to include at least one of the following: supervision, detection, measurement, and report.

In an embodiment of this application, monitoring may also be referred to as at least one of the following: supervision, detection, and measurement.

In an embodiment of this application, requesting exposure of XX information may be manifested as a request for subscription to XX information. Disclosing XX information or exposure of XX information may be manifested as sending the XX information to a consumer (such as a communication device or a communication network element in this text) subscribing to XX information.

Explicit congestion notification (Explicit Congestion Notification, ECN) is a technology for displaying notification of congestion by marking data packets with congestion: when congestion occurs, an ECN bit in a data packet is set to 11, representing congestion experienced CE.

For ECN of low latency, low loss, scalable throughput (low latency, low loss, scalable throughput, L4S), reporting of congestion experienced CE is required when lighter congestion occurs.

Explicit congestion notification (Explicit Congestion Notification (ECN)) is an extension of TCP/IP protocol, defined in RFC 3168 (2001). ECN supports end-to-end network congestion notification. This is specifically shown in FIG. 3.

In an embodiment of this application, congestion start, ongoing congestion, and congestion experienced represent one meaning.

In an embodiment of this application, congestion end, no congestion, and no congestion experienced represent one meaning.

Requesting exposure of congestion information includes requesting exposure of congestion situation information (such as congestion level).

In an embodiment of this application, any "information" in the present invention is information corresponding to a first QoS flow or a first data flow. For example, QoS information corresponding to the first QoS flow or the first data flow includes but is not limited to at least one of the following:
first information, second information, third information, fourth information, fifth information, first congestion information, second congestion information, third congestion information, first request information, second request information, information for requesting monitoring of congestion, information for requesting exposure of congestion information, information for requesting a congestion marking operation for data packets, information for requesting monitoring of first congestion, information for requesting monitoring of second congestion, and information for indicating a purpose of monitoring congestion.

For example, the first congestion information is first congestion information corresponding to the first QoS flow or the first data flow. For example, the second congestion information is second congestion information corresponding to the first QoS flow or the first data flow.

For example, the third congestion information is third congestion information corresponding to the first QoS flow or the first data flow.

In an embodiment of this application, any "request" in the present invention is a request corresponding to the first QoS flow or the first data flow.

In an embodiment of this application, "data packet" in the present invention is a data packet corresponding to the first QoS flow or the first data flow.

In an embodiment of this application, "congestion" in the present invention is congestion corresponding to the first QoS flow or the first data flow.

The first data flow is a data flow bound to the first QoS flow. The first QoS flow is one QoS flow.

In an embodiment of this application, congestion may be a situation where network transmission performance degrades due to limited resources at transmission nodes when the number of packets transmitted in a packet-switched network is too large. When congestion occurs in the network, data loss, increased delay, and decreased throughput generally occur, and in severe cases, congestion collapse (congestion collapse) may even be caused.

In an embodiment of this application, congestion situation information may be information indicating congestion situations such as congestion start, congestion end, congestion level, and congestion direction.

In an optional embodiment of this application, monitoring of congestion may include at least one of the following: monitoring of congestion situation, measurement of congestion situation, and/or reporting of congestion situation. The congestion situation includes at least one of the following: congestion start or congestion experienced, congestion end or no congestion, congestion downgrade, and congestion upgrade.

In an optional embodiment of this application, congestion occurring in a first object means that data transmission in the first object is congested.

In an optional embodiment of this application, congestion situation information of the first object refers to congestion situation information of data transmission in the first object.

In an optional embodiment of this application, congestion occurring in the first object includes one of the following: QoS of the first object cannot be satisfied, a sending rate of data of the first object is lower than a receiving rate of data of the first object, time-frequency resources are insufficient, buffer overflow occurs, and queue overflow occurs.

In an implementation, time-frequency resources are insufficient, for example, time-frequency resources of a first cell are insufficient to transmit all received data or buffered data.

In an implementation, the first object may be a first data radio bearer (Data Radio Bearer, DRB). Congestion occurring in the first DRB includes one of the following: QoS of the first DRB cannot be satisfied, and a sending rate of data of the first DRB is lower than a receiving rate of data of the first object. QoS cannot be satisfied, for example, rate cannot be guaranteed, packet loss rate cannot be guaranteed, packet loss proportion cannot be guaranteed, and PER cannot be guaranteed.

In an implementation, the sending rate of data of the first object being lower than the receiving rate of data of the first object includes: a sending rate of data of the first object sent to a first interface is lower than a sending rate of data of the first object received from a second interface. The first interface or the second interface includes one of the following: Uu interface, N9 or N3 interface, and N6 interface.

When the first interface is Uu interface, the second interface may be N3 interface.

When the first interface is N3 interface, the second interface may be Uu interface.

When the first interface is N6 interface, the second interface may be N3 or N9 interface.

When the first interface is N3 or N9 interface, the second interface may be N6 interface.

In an optional embodiment of this application, the QoS includes at least one of the following: guaranteed bit rate (such as guaranteed flow bit rate (Guaranteed Flow Bit Rate, GFBR)), minimum transmission rate (such as minimum flow bit rate), packet error rate (Packet Error Rate, PER), packet loss rate, transmission delay budget, and buffer delay budget.

A case where the QoS cannot be satisfied includes at least one of the following: guaranteed flow bit rate cannot be guaranteed (such as actual transmission rate is lower than guaranteed flow bit rate), minimum transmission rate cannot be satisfied (such as actual minimum transmission rate is lower than minimum transmission rate), packet error rate cannot be satisfied (such as actual packet error rate is higher than packet error rate in QoS), packet loss rate cannot be satisfied (such as actual packet loss rate is higher than packet error rate in QoS), transmission delay budget cannot be satisfied (actual transmission delay overhead is greater than transmission delay budget), and buffer delay budget cannot be satisfied (actual buffer delay overhead of data is greater than buffer delay budget).

In an optional embodiment of this application, a data packet includes a protocol data unit (Protocol Data Unit, PDU) packet data unit.

In an optional embodiment of this application, a QoS flow with a corresponding congestion monitoring request means that a congestion monitoring request corresponding to the QoS flow is received and acquired. If the congestion monitoring request corresponding to the QoS flow is not acquired, the QoS flow may be considered to have no corresponding congestion monitoring request. The same applies to a data flow with a corresponding congestion monitoring request.

In an optional embodiment of this application, a data flow is an abbreviation of a service data flow.

In an optional embodiment of this application, a channel includes at least one of the following: a session (session) (such as a PDU session or a session between a RAN and a CN), GTP-U, a tunnel between a RAN and a CN, a QoS flow, a QoS sub-flow, an evolved packet system (Evolved Packet System, EPS) bearer, a PDP context, a DRB, a signalling radio bearer (Signalling Radio Bearer, SRB), a logical channel, an IPsec association, a GPRS tunneling protocol (GPRS Tunnelling Protocol, GTP) tunnel (tunnel). The channel may be instantiated as any of the above types of channels.

In an embodiment of this application, an NG interface may be also referred to as an S1 interface or an N2 interface, and the naming is not limited.

The following describes a congestion information manipulation method and apparatus, and a communication device according to embodiments of this application.

Referring to FIG. 4, an embodiment of this application provides a schematic flowchart of a method for reporting congestion information, where the method is applied to a first communication device, and the first communication device may be a RAN network element. The method 400 includes the following steps.

Step 410: A first communication device acquires first information, where the first information includes first request information for requesting monitoring of congestion.

Step 420: The first communication device reports first congestion information or second congestion information based on the first information, where the first congestion information is information for describing a congestion situation, and the second congestion information is information for describing data packets requiring congestion marking.

In this embodiment of this application, the first communication device includes a radio access network (Radio Access Network, RAN) device.

In this embodiment of this application, the first communication device may acquire the first information from a third communication device. For example, the third communication device is a session management function (Session Management Function, SMF).

In this embodiment of this application, the first communication device may choose to report the first congestion information or the second congestion information based on the first information.

In this embodiment of this application, the information of the congestion situation includes but is not limited to a congestion level. In an implementation, the information of the congestion situation may be represented by a percentage. For example, 0% indicates no congestion, and a higher percentage indicates a higher congestion level.

In an implementation, information of data packets requiring congestion marking includes one of the following: a quantity of a percentage of data packets requiring congestion marking in all data packets, and a percentage of a quantity of data packets requiring congestion marking in all data packets. For example, when congestion occurs in a QoS flow, data packets in the QoS flow may require congestion marking.

In an implementation, a congestion situation (such as a congestion level) has a corresponding relationship with data packets requiring congestion marking. For example, for different congestion situations (such as different congestion levels), quantities or percentages of data packets correspondingly requiring congestion marking may be different. It is understandable that a more severe congestion situation (such as a higher congestion level) leads to a higher quantity or percentage of data packets correspondingly requiring congestion marking.

In an implementation, step 420 may include: the first communication device reports the first congestion information or the second congestion information based on the first information and second information, where the second information includes at least one of the following: capability of the first communication device and a local policy of the first communication device.

In an implementation, the first communication device may report the first congestion information in a case that the first communication device has a first capability and/or does not have a second capability.

In an implementation, the first communication device may report the second congestion information in a case that the first communication device has a first capability and/or does not have a second capability.

The first capability includes at least one of the following cases: the first communication device supports monitoring of a congestion situation, and the first communication device supports reporting of a monitored congestion situation.

The second capability includes at least one of the following cases: the first communication device supports congestion monitoring corresponding to congestion marking (such as ECN for L4S), and the first communication device supports reporting of information of data packets requiring congestion marking.

In an implementation, the local policy of the first communication device requests reporting of one of the following: the first congestion information and the second congestion information.

For example, based on first request information (for example, QoS parameters required to be monitored, and the QoS parameters required to be monitored include congestion information) sent by an SMF to a RAN for requesting monitoring of congestion and a local policy of the RAN and/or a first capability of the RAN, the RAN chooses to report information for describing a congestion situation (such as a congestion level) to a UPF. Then, in a case that the UPF has received the information for describing a congestion situation, the UPF discloses information of a congestion situation through a service-oriented interface or an N4 interface based on second request information sent by the SMF for requesting monitoring of congestion.

For another example, based on first request information (for example, QoS parameters required to be monitored, and the QoS parameters required to be monitored include congestion information) sent by an SMF to a RAN for requesting monitoring of congestion and a local configuration of the RAN and/or a second capability of the RAN, the RAN chooses to report information for describing data packets requiring congestion marking to a UPF. Then, based on the received information for describing data packets requiring congestion marking and second request information sent by the SMF for requesting monitoring of congestion, the UPF sets congestion marks (for example, a control element (Control Element, CE)) on the corresponding percentage of data packets in a congestion direction.

In an implementation, the first request information includes one of the following:
information for requesting monitoring of first congestion, where a purpose of the monitoring first congestion includes performing congestion information exposure; and
information for requesting monitoring of second congestion, where a purpose of the monitoring second congestion includes performing congestion marking for data packets.

In an implementation, step 420 may include:
The first communication device reports the first congestion information in a case that the first information includes the information for requesting monitoring of first congestion.

The first communication device reports the second congestion information in a case that the first information includes the information for requesting monitoring of second congestion.

In this embodiment of this application, when the first communication device acquires the information for requesting monitoring of first congestion, the first communication device reports the first congestion information; and when the first communication device acquires the information for requesting monitoring of second congestion, the first communication device reports the second congestion information; where the reporting method is to perform congestion marking for data packets.

In an implementation, the first request information, for example, a required QoS parameter includes at least one of the following: first congestion and second congestion. For example, the first congestion may be used for performing congestion information exposure through an N4 interface or a service-oriented interface of a UPF. The second congestion is used for performing congestion marking for data packets, for example, congestion for ECN marking for L4S.

In an implementation, the first information further includes: third information, where the third information is used for reporting at least one of the following:
information of a congestion situation; and
information of data packets requiring congestion marking.

In an implementation, step 420 may include:
(1) The first communication device reports the first congestion information in a case that the third information includes information for requesting reporting of a congestion situation.
(2) The first communication device reports the second congestion information in a case that the third information includes information for requesting reporting of data packets requiring congestion marking.

In the above implementation, the first communication device acquires the third information in the first information to acquire a type of congestion information to be reported as information for requesting reporting of a congestion situation or information for requesting reporting of data packets requiring congestion marking, and then reports, based on the third information in the first information, congestion information corresponding to the type of congestion information indicated by the third information in the first information.

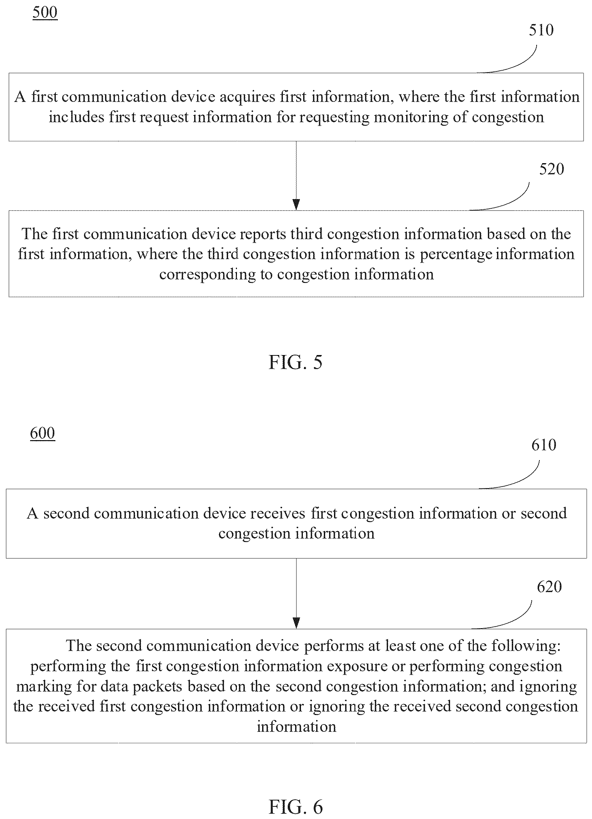

Referring to FIG. 5, an embodiment of this application provides a schematic flowchart of a method for reporting congestion information, where the method is applied to a first communication device, and the first communication device may be a RAN network element. The method 500 includes the following steps.

Step 510: A first communication device acquires first information, where the first information includes first request information for requesting monitoring of congestion.

Step 520: The first communication device reports third congestion information based on the first information, where the third congestion information is percentage information corresponding to congestion information.

The method 500 differs from the method 400 in that in the method 500, the first communication device does not distinguish whether the reported third congestion information is information for describing a congestion situation or information for describing data packets requiring congestion marking, and a second communication device may interpret the third congestion information reported by the first communication device as the first congestion information or the second congestion information based on at least one of second request information for requesting monitoring of congestion, information for requesting exposure of congestion information, or information for requesting a congestion marking operation for data packets sent by a third communication device.

In an implementation, the percentage information corresponding to congestion information may be used for indicating at least one of the following: a congestion situation and a percentage of data packets requiring congestion marking in all data packets.

In an implementation, the percentage information corresponding to congestion information is used for indicating both a congestion situation and a percentage of data packets requiring congestion marking in all data packets.

In this embodiment of this application, the first communication device may include a RAN device.

In this embodiment of this application, the first communication device may acquire the first information from a third communication device, for example, acquiring the first information from a session management function (Session Management Function, SMF).

In an implementation, a congestion situation (such as a congestion level) has a corresponding relationship with data packets requiring congestion marking. For example, for different congestion situations (such as different congestion levels), quantities or percentages of data packets correspondingly requiring congestion marking may be different. It is understandable that a more severe congestion situation (such as a higher congestion level) leads to a higher quantity or percentage of data packets correspondingly requiring congestion marking.

Therefore, one percentage may indicate both a congestion situation and a percentage of data packets requiring congestion marking. For example, a percentage being 0% may indicate one of the following: no congestion and a percentage of zero of data packets requiring congestion marking (that is, congestion marking is not required for data packets). A higher percentage indicates one of the following: a more severe congestion situation (such as a higher congestion level) and a higher percentage of data packets requiring congestion marking.

In this embodiment of this application, the first communication device may acquire the first information from a third communication device, where the third communication device may be a session management function (Session Management Function, SMF).

According to this embodiment of this application, the first communication device acquires first information including first request information, and then reports first congestion information or second congestion information based on the first information, so that the first communication device determines a type of congestion information to be reported.

Referring to FIG. 6, an embodiment of this application provides a schematic flowchart of a congestion information manipulation method, where the method is applied to a second communication device, and the second communication device may include a CN network element. The CN network element includes a UPF (such as a PSA UPF). The method 600 corresponds to the above method 400. As shown in FIG. 6, the method 600 may include the following steps.

Step 610: A second communication device receives first congestion information or second congestion information, where the first congestion information is information for describing a congestion situation, and the second congestion information is information for describing data packets requiring congestion marking.

Step 620: The second communication device performs at least one of the following:
performing the first congestion information exposure or performing congestion marking for data packets based on the second congestion information; and
ignoring the received first congestion information or ignoring the received second congestion information.

In this embodiment of this application, the second communication device includes a user plane function (User Plane Function, UPF) device.

In this embodiment of this application, the second communication device may receive the first congestion information or the second congestion information from a first communication device, for example, receiving the first congestion information or the second congestion information from a RAN. In specific applications, the first communication device may send the first congestion information or the second congestion information using the above method. For details, reference may be made to the description of the method embodiment in FIG. 4.

In an implementation, information of data packets requiring congestion marking includes one of the following: a quantity of a percentage of data packets requiring congestion marking in all data packets, and a percentage of a quantity of data packets requiring congestion marking in all data packets. For example, when congestion occurs in a QoS flow, data packets in the QoS flow may require congestion marking.

In an implementation, the ignoring, by the second communication device, the received first congestion information may include:
ignoring, by the second communication device, the received first congestion information in a case that a first condition is satisfied, where the first condition includes at least one of the following:
the second communication device has not acquired information for requesting exposure of congestion information; and
the second communication device has acquired information for requesting a congestion marking operation for data packets.

In this embodiment of this application, the second communication device has received the first congestion information, that is, the information for describing a congestion situation, while the second communication device has not acquired the information for requesting exposure of congestion information, so the second communication device ignores the received first congestion information, for example, not performing the first congestion information exposure. Alternatively, the second communication device has received the first congestion information, that is, the information for describing a congestion situation, while the second communication device has acquired the information for requesting a congestion marking operation for data packets, so the second communication device ignores the received first congestion information, for example, not performing the first congestion information exposure.

In an implementation, the second communication device may acquire the information for requesting exposure of congestion information or the information for requesting a congestion marking operation for data packets from a third communication device.

For example, the second communication device has received the first congestion information sent by the first communication device, while the third communication device has not instructed the second communication device to perform congestion information exposure or instructed the second communication device to perform a congestion marking operation for data packets, that is, the third communication device has not sent the information for requesting exposure of congestion information to the second communication device or sent the information for requesting a congestion marking operation for data packets to the second communication device, so the second communication device is not required to perform congestion information exposure. Therefore, the second communication device ignores the received first congestion information.

In an implementation, the ignoring, by the second communication device, the received second congestion information may include:
ignoring, by the second communication device, the received second congestion information in a case that a second condition is satisfied, where the second condition includes at least one of the following:
the second communication device has not acquired information for requesting a congestion marking operation for data packets; and
the second communication device has acquired information for requesting exposure of congestion information.

In this embodiment of this application, the second communication device has received the second congestion information, that is, the information for describing data packets requiring congestion marking, while the second communication device has not acquired the information for requesting a congestion marking operation for data packets, so the second communication device ignores the received second congestion information, for example, not performing congestion marking for data packets based on the second congestion information. Alternatively, the second communication device has received the second congestion information, that is, the information for describing data packets requiring congestion marking, while the second communication device has acquired the information for requesting exposure of congestion information, so the second communication device ignores the received second congestion information.

In an implementation, the second communication device may acquire the information for requesting a congestion marking operation for data packets or the information for requesting exposure of congestion information from a third communication device.

For example, the second communication device has received the second congestion information sent by the first communication device, while the third communication device has not instructed the second communication device to perform a congestion marking operation for data packets or instructed the second communication device to perform congestion information exposure, that is, the third communication device has not sent the information for requesting a congestion marking operation for data packets to the second communication device or sent the information for requesting exposure of congestion information to the second communication device, so the second communication device is not required to perform a congestion marking operation for data packets. Therefore, the second communication device ignores the received second congestion information.

In an implementation, the first condition or the second condition further includes: the second communication device has acquired second request information for requesting monitoring of congestion.

In an implementation, the second communication device may acquire the second request information from a third communication device (for example, an SMF).

The second request information for requesting monitoring of congestion includes but is not limited to: monitored QoS parameters, and the monitored QoS parameters include congestion.

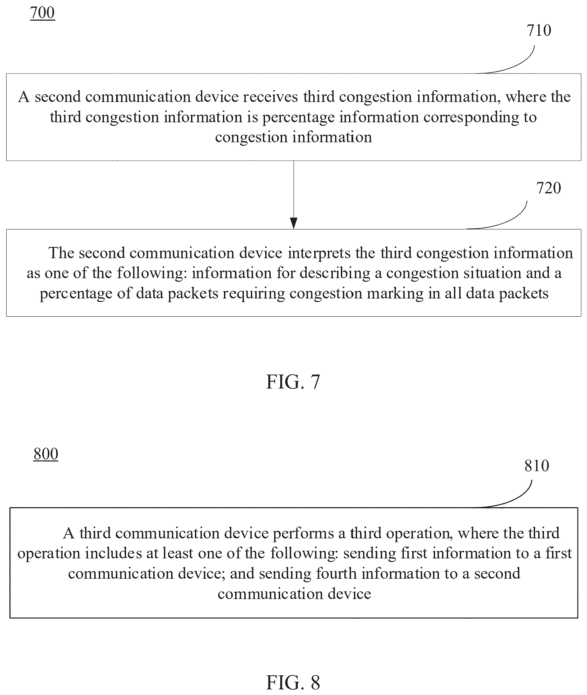

Referring to FIG. 7, an embodiment of this application provides a schematic flowchart of another congestion information manipulation method, where the method is applied to a second communication device, and the second communication device may be a user plane function (User Plane Function, UPF) network element. The method 700 corresponds to the above method 500. As shown in FIG. 7, the method 700 may include the following steps.

Step 710: A second communication device receives third congestion information, where the third congestion information is percentage information corresponding to congestion information.

Step 720: The second communication device interprets the third congestion information as one of the following: information for describing a congestion situation and a percentage of data packets requiring congestion marking in all data packets.

In this embodiment of this application, the second communication device includes a user plane function (User Plane Function, UPF) device.

In this embodiment of this application, the second communication device may receive the third congestion information from a first communication device, for example, receiving the third congestion information from a RAN.

In this embodiment of this application, the second communication device includes a user plane function (User Plane Function, UPF) device.

In this embodiment of this application, the second communication device may receive the third congestion information from a first communication device, for example, receiving the third congestion information from a RAN.

In this embodiment of this application, the third congestion information may be sent by the first communication device in the manner described in the method embodiment shown in FIG. 5.

In an implementation, the second communication device interpreting the third congestion information as information for describing a congestion situation includes:
in a case that a third condition is satisfied, the second communication device interprets the third congestion information as the information for describing a congestion situation, where
the third condition includes: the second communication device has acquired second request information for requesting monitoring of congestion.

In an implementation, the second communication device may acquire the second request information from a third communication device (for example, an SMF).

The second request information for requesting monitoring of congestion includes but is not limited to: monitored QoS parameters, and the monitored QoS parameters include congestion.

In an implementation, the second communication device interpreting the third congestion information as one of the following: information for describing a congestion situation and a percentage of data packets requiring congestion marking in all data packets includes:
in a case that a fourth condition is satisfied, the second communication device determines the second congestion information based on the third congestion information, where the fourth condition includes: the second communication device has acquired information for requesting a congestion marking operation for data packets.

In an implementation, the second communication device may acquire the information for requesting a congestion marking operation for data packets from a third communication device (for example, an SMF).

In this embodiment of this application, the second communication device may receive first congestion information, second congestion information or third congestion information from a first communication device, where the first communication device may be a RAN, and the first communication device may report the first congestion information or the second congestion information using the manner described in the above method 400, or report the third congestion information using the manner described in the above method 500.

In this embodiment of this application, the second communication device receives the first congestion information or the second congestion information reported by the first communication device. Since the first congestion information is information for describing a congestion situation, and the second congestion information is information for describing data packets requiring congestion marking, the second communication device can determine a corresponding processing operation based on the received congestion information.

Alternatively, the second communication device receives the third congestion information, then interprets the third congestion information as information for describing a congestion situation and a percentage of data packets requiring congestion marking in all data packets, and performs an operation corresponding to the congestion information.

Referring to FIG. 8, an embodiment of this application provides a schematic flowchart of a congestion information manipulation method, where the method is applied to a third communication device, and the third communication device may include a CN network element (such as an SMF, a PCF, or an AMF). As shown in FIG. 8, the method 800 may include the following steps.

Step 810: A third communication device performs a third operation, where the third operation includes at least one of the following:
sending first information to a first communication device, where the first information includes at least one of the following: first request information for requesting monitoring of congestion and third information, where the third information is used for requesting reporting of one of the following: information of a congestion situation and information of data packets requiring congestion marking; and
sending fourth information to a second communication device, where the fourth information includes at least one of the following: second request information for requesting monitoring of congestion, information for requesting exposure of congestion information, and information for requesting a congestion marking operation for data packets.

In an implementation, the information for requesting exposure of congestion information may include: information of a consumer subscribing to congestion information, a manner of sending congestion information, and the like.

The first request information includes: monitoring congestion at a RAN and/or an air interface. The second request information includes: monitoring reported congestion information through a user plane channel. For example, a first communication device monitors congestion in a first QoS flow and reports corresponding congestion information through a user plane channel (for example, the congestion information is carried in a header of a data packet in the user plane channel).

In an implementation, the third communication device performing the third operation includes:
in a case that a fifth condition is satisfied, the third communication device performs at least one of the following:
sending the first request information for requesting monitoring of congestion to the first communication device; and
sending the second request information for requesting monitoring of congestion to the second communication device; where
the fifth condition includes at least one of the following:
   acquisition of a request for performing congestion information exposure;
   acquisition of a request for subscription to congestion information;
   acquisition of information for requesting monitoring of congestion, where a purpose of the monitoring congestion includes performing congestion information exposure; and
   acquisition of information for requesting monitoring of first congestion, where a purpose of the monitoring first congestion includes performing congestion information exposure.

Exposure of congestion information or congestion information for exposure includes: sending congestion information to a consumer subscribing to congestion information (such as a CN network element, AF, or a third-party application).

In an implementation, the third communication device receives one of the following from a fourth communication device (such as a PCF): a request for monitoring congestion; and information for requesting monitoring of first congestion.

In an implementation, the third communication device receives a request for performing congestion information exposure or a request for subscription to congestion information from a fifth communication device.

In an implementation, the first request information or the second request information may include: information for requesting monitoring of first congestion, where a purpose of the monitoring first congestion includes performing congestion information exposure.

In an implementation, the third communication device performing the third operation further includes:
in a case that a sixth condition is satisfied, the third communication device performs at least one of the following:
sending the first request information for requesting indication of monitoring of congestion to the first communication device; and
sending the information for requesting a congestion marking operation for data packets to the second communication device;
the sixth condition includes at least one of the following:
   acquisition of a request for performing a congestion marking operation for data packets;
   acquisition of information for requesting monitoring of congestion, where a purpose of the monitoring congestion includes performing a congestion marking operation for data packets; and
   acquisition of information for requesting monitoring of second congestion, where a purpose of the monitoring second congestion includes performing a congestion marking operation for data packets.

For example, the congestion marking operation is ECN for L4S.

In an implementation, the third communication device may receive one of the following from a fourth communication device (such as a PCF): a request for monitoring congestion; and information for requesting monitoring of second congestion.

In an implementation, the third communication device may receive a request for performing a congestion marking operation for data packets from a fifth communication device.

In an implementation, the first request information and/or the second request information includes: information for requesting monitoring of second congestion, where a purpose of the monitoring second congestion includes performing a congestion marking operation for data packets.

In an implementation, the third communication device performing the third operation includes:
acquiring fourth information and performing the third operation based on the fourth information.

In an implementation, the third communication device determines whether a fifth condition and/or a sixth condition is satisfied based on the fourth information.

In an implementation, the third communication device may acquire the fourth information from a fourth communication device.

In this embodiment of this application, the third communication device sends the first information to the first communication device or sends the fourth information to the second communication device to notify the first communication device to monitor congestion, or notify the second communication device of the information for requesting exposure of congestion information or the information for requesting a congestion marking operation for data packets, thereby enabling the first communication device or the second communication device to determine a corresponding operation.

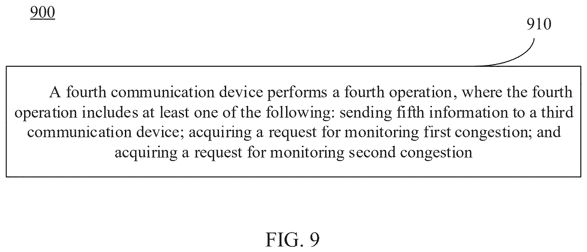

Referring to FIG. 9, an embodiment of this application provides a schematic flowchart of a congestion information manipulation method, where the method is applied to a fourth communication device, and the fourth communication device may include a CN network element (such as a PCF). As shown in FIG. 9, the method 900 may include the following steps.

Step 910: A fourth communication device performs a fourth operation, where the fourth operation includes: sending fifth information to a third communication device, where the fifth information includes at least one of the following:
information for requesting monitoring of congestion, where
a purpose of the monitoring congestion includes at least one of the following: performing congestion information exposure and performing a congestion marking operation for data packets;
information for requesting monitoring of first congestion, where a purpose of the monitoring first congestion includes performing congestion information exposure; and
information for requesting monitoring of second congestion, where a purpose of the monitoring second congestion includes performing a congestion marking operation for data packets.

In an implementation, the information for requesting exposure of congestion information may include information of a consumer subscribing to congestion information, a manner of sending congestion information, and the like.

In an implementation, the fourth communication device performing the fourth operation includes:
the fourth communication device performs the fourth operation in a case that a seventh condition is satisfied, where
the seventh condition includes: a local policy of the fourth communication device requests execution of the fourth operation.

In an implementation, the seventh condition further includes one of the following:
acquisition of a request for performing congestion information exposure;
acquisition of a request for subscription to congestion information;
acquisition of support of a first data flow for congestion marking operations (such as ECN or ECN for L4S); and
acquisition of a request for performing a congestion marking operation for data packets of a first data flow.

In an implementation, the fourth communication device performing the fourth operation includes:
sending sixth information to a third communication device in a case that an eighth condition is satisfied, where the sixth information includes at least one of the following:
information for requesting monitoring of congestion, where
a purpose of the monitoring congestion includes at least one of the following: performing congestion information exposure; and
information for requesting monitoring of first congestion, where a purpose of the monitoring first congestion includes performing congestion information exposure; where
the eighth condition includes:
   acquisition of a request for performing congestion information exposure or a request for subscription to congestion information.

In an implementation, the fourth communication device performing the fourth operation includes:
sending seventh information to a third communication device in a case that a ninth condition is satisfied, where the seventh information includes at least one of the following:
information for requesting monitoring of congestion, where
a purpose of the monitoring congestion includes: performing a congestion marking operation for data packets; and
information for requesting monitoring of second congestion, where a purpose of the monitoring second congestion includes performing a congestion marking operation for data packets; where
the ninth condition includes at least one of the following:
   acquisition of support of a first data flow for congestion marking operations; and
   acquisition of a request for performing a congestion marking operation for data packets of a first data flow.

In an implementation, the fourth communication device acquires support of the first data flow for ECN or ECN for L4S through a traffic detection result.

In an implementation, the fourth communication device acquires a request for performing a congestion marking operation for data packets through at least one of the following: AF, NEF, and TSCTSF.

In an implementation, the seventh information is included in a first policy (such as PCC rule) for sending. The first policy is a policy corresponding to the first data flow.

In an example where the first communication device is a RAN, the second communication device is a UPF, the third communication device is an SMF, and a fourth communication device is a PCF, the technical solutions provided by the embodiments of this application are described below through specific application scenarios.

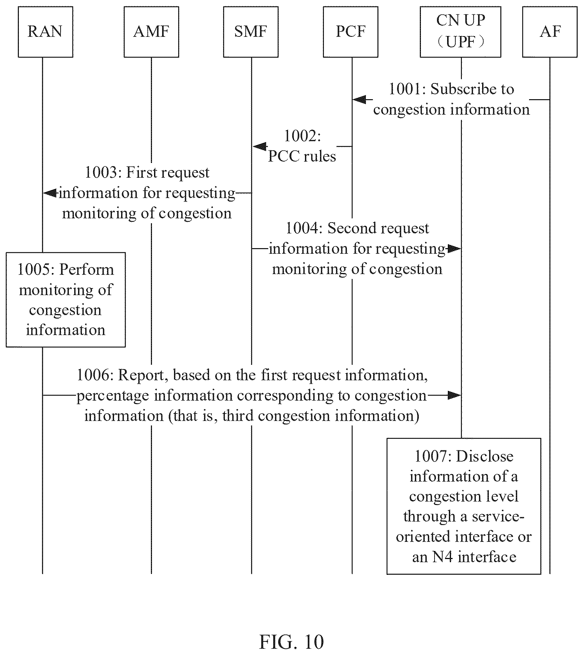

FIG. 10 shows a schematic flowchart of a congestion information manipulation method according to an embodiment of this application. In the flow shown in FIG. 10, a RAN reports third congestion information, and a UPF interprets the third congestion information as information for describing a congestion situation (that is, first congestion information) based on second request information sent by an SMF for requesting monitoring of congestion.

As shown in FIG. 10, the method mainly includes the following steps.

Step 1001: An AF subscribes to congestion information from a PCF.

Since the PCF has acquired a request for performing a congestion marking operation for data packets of a first data flow (that is, the above ECN marking operation for L4S), the above eighth condition is satisfied, the PCF sends fifth information to an SMF according to the solution described in the embodiment shown in FIG. 9. Therefore, the fifth information may include at least one of the following:
information for requesting monitoring of congestion,
where
a purpose of the monitoring congestion includes performing congestion information exposure;
information for requesting monitoring of first congestion, where a purpose of the monitoring first congestion includes performing congestion information exposure; and
third information for requesting reporting of information of a congestion situation;
where
the information for requesting monitoring of congestion may be embodied as QoS parameters required to be monitored, and the QoS parameters required to be monitored include congestion.

Step 1002: The PCF sends policy control and charging (Policy Control and Charging, PCC) rules to the SMF. Optionally, the PCC rules include the fifth information.

The fifth information includes at least one of the following:
information for requesting monitoring of congestion,
where
a purpose of the monitoring congestion includes performing congestion information exposure;
information for requesting monitoring of first congestion, where a purpose of the monitoring first congestion includes performing congestion information exposure; and
third information for requesting reporting of information of a congestion situation.

The fifth information includes the information for requesting monitoring of congestion. A request for monitoring congestion may be embodied as QoS parameters required to be monitored, and the QoS parameters required to be monitored include congestion information.

The SMF may perform a third operation based on the fifth information (such as the information for requesting monitoring of congestion). Specifically, the SMF may perform the third operation in the manner of the third communication device described in the method embodiment shown in FIG. 8.

Step 1003: The SMF sends first request information for requesting monitoring of congestion to the RAN, where the first request information is as described in the embodiment shown in FIG. 8 (corresponding to Option1). A purpose of the monitoring congestion includes at least one of the following: performing congestion information exposure and performing a congestion marking operation for data packets.

For example, the first request information may be embodied as QoS parameters required to be monitored, and the QoS parameters required to be monitored include congestion. The purpose of the monitoring congestion includes: performing congestion information exposure and performing a congestion marking operation for data packets.

Step 1004: The SMF sends second request information for requesting monitoring of congestion to a CN UP (UPF), where the second request information is as described in the embodiment shown in FIG. 5 (corresponding to Option2/3). For example, the first request information may be embodied as QoS parameters required to be monitored, and the QoS parameters required to be monitored include congestion.

Optionally, the SMF may send QoS parameters required to be monitored to the UPF through an N4 message, and the QoS parameters required to be monitored include congestion information.

Step 1005: The RAN performs congestion monitoring based on the first request information.

Step 1006: The RAN reports, based on the first request information sent by the SMF for requesting monitoring of congestion, to the CN UP (UPF), percentage information corresponding to congestion information (that is, third congestion information).

Step 1007: The CN UP (UPF) interprets, based on the acquired second request information for requesting monitoring of congestion, the third congestion information as information for describing a congestion situation. Optionally, the CN UP (UPF) discloses the information for describing a congestion situation through a service-oriented interface or an N4 interface.

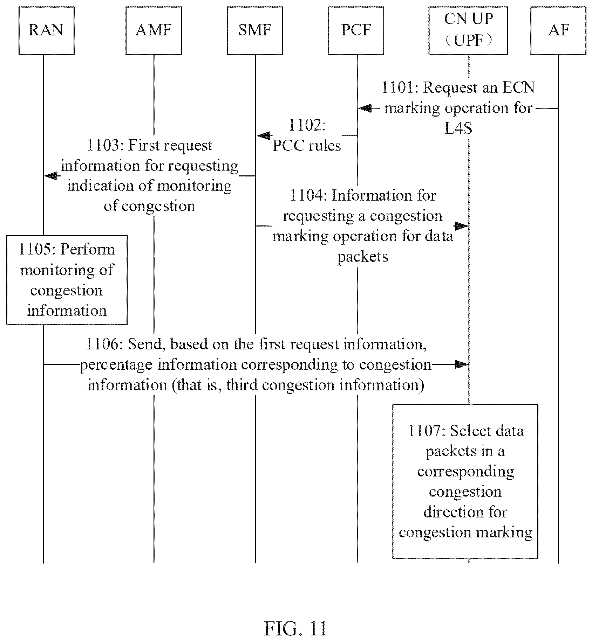

FIG. 11 shows another schematic flowchart of a congestion information manipulation method according to an embodiment of this application. In the flow shown in FIG. 11, a RAN reports third congestion information, and a UPF interprets, based on information sent by an SMF for requesting a congestion marking operation for data packets, the third congestion information as a percentage of data packets requiring congesting marking in all data packets (that is, second congestion information).

As shown in FIG. 11, the method mainly includes the following steps.

Step 1101: An AF requests an ECN marking operation for L4S from a PCF.

Since the PCF has acquired a request for performing a congestion marking operation for data packets of a first data flow (that is, the above ECN marking operation for L4S), the above ninth condition is satisfied, the PCF sends fifth information to an SMF according to the solution described in the embodiment shown in FIG. 9. Therefore, the fifth information may include at least one of the following:
information for requesting monitoring of congestion,
where
a purpose of the monitoring congestion includes performing congestion information exposure; and
information for requesting monitoring of first congestion, where a purpose of the monitoring first congestion includes performing congestion information exposure.

Step 1102: The PCF sends policy control and charging (Policy Control and Charging, PCC) rules to the SMF. Optionally, the PCC rules include the fifth information.

The fifth information includes the information for requesting monitoring of congestion. A request for monitoring congestion may be embodied as QoS parameters required to be monitored, and the QoS parameters required to be monitored include congestion information.

The SMF may perform a third operation based on the fifth information (such as the information for requesting monitoring of congestion). Specifically, the SMF may perform the third operation in the manner of the third communication device described in the method embodiment shown in FIG. 8.

Step 1103: The SMF sends first request information for requesting monitoring of congestion to the RAN, where the first request information is as described in the embodiment shown in FIG. 8 (corresponding to Option1). A purpose of the monitoring congestion includes at least one of the following: performing congestion information exposure and performing a congestion marking operation for data packets.

For example, the first request information may be embodied as QoS parameters required to be monitored, and the QoS parameters required to be monitored include congestion. The purpose of the monitoring congestion includes: performing congestion information exposure and performing a congestion marking operation for data packets.

In this embodiment, in a case that the above sixth condition is satisfied, the SMF sends the information for requesting a congestion marking operation for data packets to the UPF. The information for requesting a congestion marking operation for data packets may be embodied as an ECN marking operation for L4S.

Step 1104: The SMF sends the information for requesting a congestion marking operation for data packets to a CN UP (UPF).

Step 1105: The RAN performs congestion monitoring.

Step 1106: The RAN reports, based on the first request information sent by the SMF for requesting monitoring of congestion, to the CN UP (UPF), percentage information corresponding to congestion information (that is, third congestion information).

Step 1107: The CN UP (UPF) interprets, based on the information sent by the SMF for requesting a congestion marking operation for data packets, the third congestion information as information for describing data packets requiring congestion marking (that is, second congestion information), and selects data packets in a corresponding congestion direction for congestion marking.

Through the above technical solution provided by this embodiment of this application, the UPF may determine, based on the second request information for requesting monitoring of congestion or the information for requesting a congestion marking operation for data packets that is sent by the SMF, whether the third congestion information reported by the RAN is information for describing a congestion situation or information for describing data packets requiring congestion marking, to perform a corresponding operation on the received congestion information.

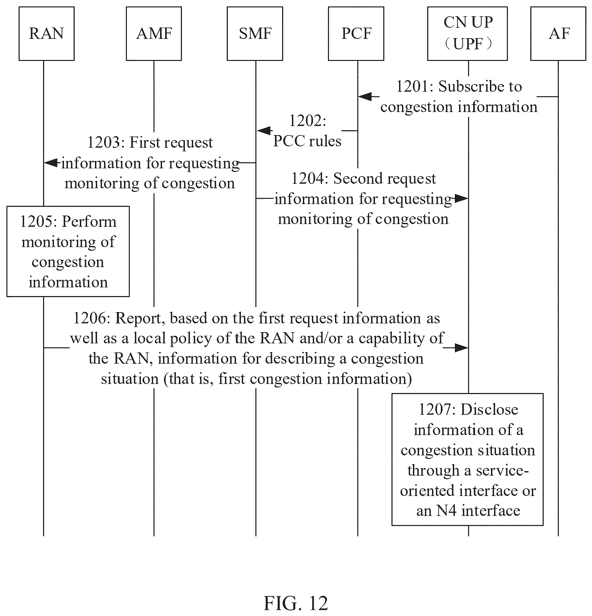

FIG. 12 shows another schematic flowchart of a congestion information manipulation method according to an embodiment of this application. In the flow shown in FIG. 12, a RAN reports first congestion information based on a local policy and/or capability of the RAN, and a UPF receives the first congestion information and discloses information for describing a congestion situation.

As shown in FIG. 12, the method mainly includes the following steps.

Step 1201: An AF subscribes to congestion information from a PCF.

Step 1202: The PCF sends policy control and charging (Policy Control and Charging, PCC) rules to the SMF. This step is same as step 1002 in FIG. 10. For details, reference may be made to the above description of step 1002.

The SMF may perform a third operation according to the PCC rules. Specifically, the SMF may perform the third operation in the manner of the third communication device described in the method embodiment shown in FIG. 8.

In this embodiment, since the PCC rules received by the SMF include information for requesting monitoring of congestion, that is, the above fifth condition is satisfied, the SMF sends first request information for requesting monitoring of congestion to the RAN, where the first request information for requesting monitoring of congestion may be embodied as QoS parameters required to be monitored, and the QoS parameters required to be monitored include congestion information.

Step 1203: The SMF sends the first request information for requesting monitoring of congestion to the RAN.

Step 1204: The SMF sends second request information for requesting monitoring of congestion to a CN UP (UPF).

Step 1204: The SMF sends second request information for requesting monitoring of congestion to a CN UP (UPF).

Since the PCC rules received by the SMF include information for requesting monitoring of congestion, that is, the above fifth condition is satisfied, the SMF sends the second request information for requesting monitoring of congestion to the CN UP (UPF), where the second request information may be embodied as QoS parameters required to be monitored, and the QoS parameters required to be monitored include congestion information.

Optionally, the SMF may send QoS parameters required to be monitored to the UPF through an N4 message, and the QoS parameters required to be monitored include congestion information.

Step 1205: The RAN performs congestion monitoring.

Step 1206: The RAN reports, based on the first request information sent by the SMF for requesting monitoring of congestion as well as the local policy of the RAN and/or the capability of the RAN, to the CN UP (UPF), the information for describing a congestion situation (that is, the first congestion information).

For example, if the RAN has a first capability (that is, supporting monitoring of a congestion situation or supporting reporting of a monitored congestion situation), the RAN reports the first congestion information. Alternatively, if the RAN does not have a second capability (that is, supporting congestion monitoring corresponding to congestion marking (such as ECN or ECN for L4S) or supporting reporting of information of data packets requiring congestion marking), the RAN reports the first congestion information.

Step 1207: The CN UP (UPF) discloses information of a congestion situation through a service-oriented interface or an N4 interface.

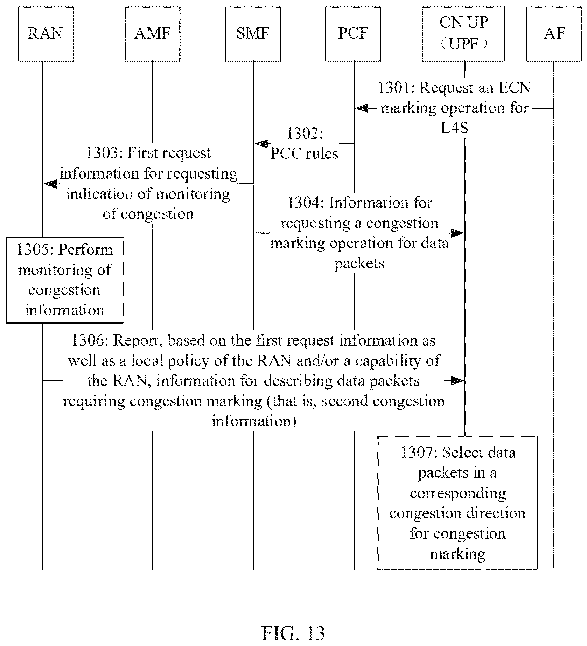

FIG. 13 shows another schematic flowchart of a congestion information manipulation method according to an embodiment of this application. In the flow shown in FIG. 13, a RAN reports second congestion information based on a local policy and/or capability of the RAN, and a UPF receives the second congestion information.

As shown in FIG. 13, the method mainly includes the following steps.

Step 1301: An AF requests an ECN marking operation for L4S from a PCF.

Since the PCF has acquired a request for performing a congestion marking operation for data packets of a first data flow (that is, the above ECN marking operation for L4S), and the above ninth condition is satisfied, the PCF sends seventh information to an SMF according to the solution described in the embodiment shown in FIG. 9. Therefore, PCC rules may include at least one of the following:
information for requesting monitoring of congestion, where
a purpose of the monitoring congestion includes: performing a congestion marking operation for data packets; and
information for requesting monitoring of second congestion, where a purpose of the monitoring second congestion includes performing a congestion marking operation for data packets.

For example, the PCC rules may include QoS parameters required to be monitored, and the QoS parameters required to be monitored include the ECN marking operation for L4S.

Step 1302: The PCF sends policy control and charging (Policy Control and Charging, PCC) rules to the SMF. Optionally, the PCC rules include the seventh information.

Step 1303: The SMF sends first request information for requesting indication of monitoring of congestion to the RAN.

In this embodiment, the QoS parameters required to be monitored are acquired from the PCC rules, the QoS parameters required to be monitored include the ECN marking operation for L4S, and the above sixth condition is satisfied, so the SMF sends first request information for requesting monitoring of congestion to the RAN.

Step 1304: The SMF sends information for requesting a congestion marking operation for data packets to a CN UP (UPF).

In this embodiment, the QoS parameters required to be monitored are acquired from the PCC rules, the QoS parameters required to be monitored include the ECN marking operation for L4S, and the above sixth condition is satisfied, so the SMF sends the information for requesting a congestion marking operation for data packets to the UPF. The information for requesting a congestion marking operation for data packets may be embodied as the ECN marking operation for L4S.

Step 1305: The RAN performs congestion monitoring.

Step 1306: The RAN reports, based on the first request information sent by the SMF for requesting monitoring of congestion as well as the local policy of the RAN and/or the capability of the RAN, to the CN UP (UPF), information for describing data packets requiring congestion marking (that is, the second congestion information).

For example, if the RAN does not have a first capability (that is, supporting monitoring of a congestion situation or supporting reporting of a monitored congestion situation), the RAN reports the second congestion information. Alternatively, if the RAN has a second capability (that is, supporting congestion monitoring corresponding to congestion marking (such as ECN or ECN for L4S) or supporting reporting of information of data packets requiring congestion marking), the RAN reports the second congestion information.

Step 1307: The CN UP (UPF) selects data packets in a corresponding congestion direction for congestion marking based on the information reported by the RAN for describing data packets requiring congestion marking.

Through the above technical solution provided by this embodiment of this application, the RAN may determine, based on the local policy or capability, whether to report the information for describing a congestion situation or the information for describing data packets requiring congestion marking, and then report corresponding content, so that the UPF can know whether the received congestion information is the information for describing a congestion situation or the information for describing data packets requiring congestion marking, to perform a corresponding operation on the received congestion information.

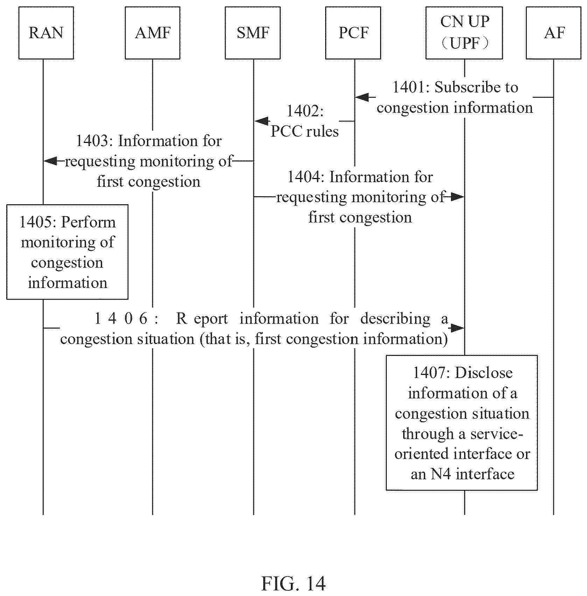

FIG. 14 shows another schematic flowchart of a congestion information manipulation method according to an embodiment of this application. In the flow shown in FIG. 14, first request information sent by an SMF to a RAN is information for requesting monitoring of first congestion, the RAN reports first congestion information based on the information for requesting monitoring of first congestion, and a UPF receives the first congestion information and discloses information for describing a congestion situation.

As shown in FIG. 14, the method mainly includes the following steps.

Step 1401: An AF subscribes to congestion information from a PCF.

Step 1402: The PCF sends policy control and charging (Policy Control and Charging, PCC) rules to the SMF. The PCC rules include fifth information. The fifth information includes at least one of the following:
a purpose of the monitoring congestion, where the purpose of the monitoring congestion is a request for monitoring first congestion, and a purpose of the monitoring first congestion includes performing congestion information exposure.

Step 1403: The SMF sends the first request information to the RAN, as described in the embodiment shown in FIG. 4, where the first request information includes one of the following:
the information for requesting monitoring of first congestion, where the purpose of the monitoring first congestion includes performing congestion information exposure.

Step 1404: The SMF sends fourth information to a CN UP (UPF).

The fourth information includes at least one of the following:
information for requesting exposure of congestion information or second request information, as described in the embodiment shown in FIG. 5.

The second request information includes one of the following:
the information for requesting monitoring of first congestion, where the purpose of the monitoring first congestion includes performing congestion information exposure.

Step 1405: The RAN performs congestion monitoring.

Step 1406: The RAN performs congestion information exposure and reports the information for describing a congestion situation (that is, the first congestion information) to the CN UP (UPF).

Step 1407: The CN UP (UPF) discloses information of a congestion situation through a service-oriented interface or an N4 interface.

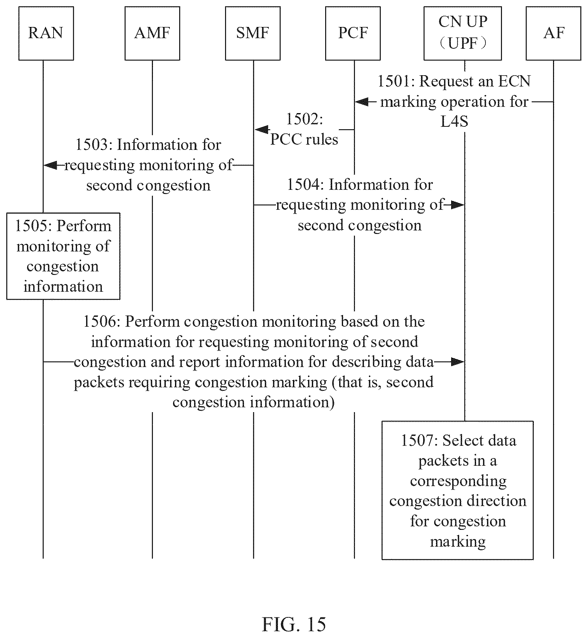

FIG. 15 shows another schematic flowchart of a congestion information manipulation method according to an embodiment of this application. In the flow shown in FIG. 15, first request information sent by an SMF to a RAN is information for requesting monitoring of second congestion, the RAN reports second congestion information based on the information for requesting monitoring of second congestion, and a UPF receives the second congestion information and performs congestion marking for data packets based on the second congestion information.

As shown in FIG. 15, the method mainly includes the following steps.

Step 1501: An AF requests an ECN marking operation for L4S from a PCF.

Step 1502: The PCF sends policy control and charging (Policy Control and Charging, PCC) rules to the SMF. The PCC rules include fourth information. The fourth information includes at least one of the following:
information for requesting monitoring of second congestion, where a purpose of the monitoring second congestion includes performing a congestion marking operation for data packets.

Step 1503: The SMF sends the first request information to the RAN, as described in the embodiment shown in FIG. 4. The first request information includes one of the following:
the information for requesting monitoring of second congestion, where the purpose of the monitoring second congestion includes performing a congestion marking operation for data packets.

Step 1504: The SMF sends one of the following to a CN UP (UPF):
an ECN mark for L4S; and
the information for requesting monitoring of second congestion, where the purpose of the monitoring second congestion includes performing a congestion marking operation for data packets.

Step 1505: The RAN performs congestion monitoring.

Step 1506: The RAN performs congestion monitoring based on information sent by the SMF (the information for requesting monitoring of second congestion), and reports, to the CN UP (UPF), information for describing data packets requiring congestion marking (that is, the second congestion information, for example, a percentage of data packets requiring congestion marking).

Step 1507: The CN UP (UPF) selects data packets in a corresponding congestion direction for congestion marking based on the information for describing data packets requiring congestion marking.

Through the above technical solution provided by this embodiment of this application, the RAN may determine, based on a purpose of the monitoring congestion sent by the SMF, whether to report information for describing a congestion situation or the information for describing data packets requiring congestion marking, and then report corresponding content, so that the UPF can know whether the received congestion information is the information for describing a congestion situation or the information for describing data packets requiring congestion marking, to perform a corresponding operation on the received congestion information.

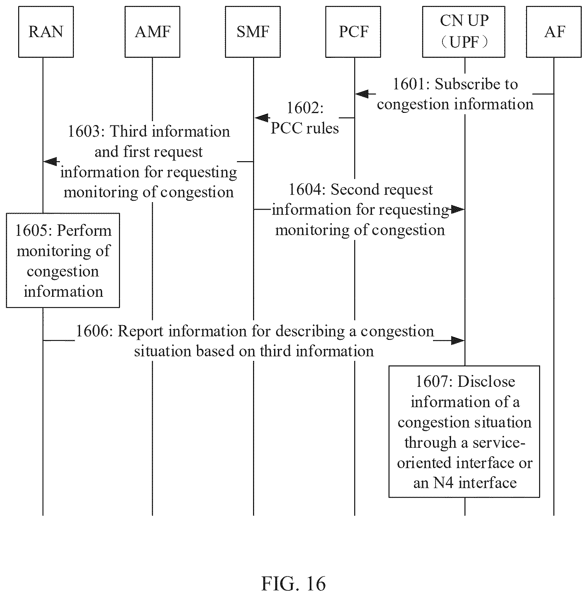

FIG. 16 shows another schematic flowchart of a congestion information manipulation method according to an embodiment of this application. In the flow shown in FIG. 16, first information sent by an SMF to a RAN includes third information, where the third information is used for requesting reporting of information of a congestion situation, the RAN reports first congestion information based on the third information, and a UPF receives the first congestion information and discloses information for describing a congestion situation.

As shown in FIG. 16, the method mainly includes the following steps.

Step 1601: An AF subscribes to congestion information from a PCF.

Step 1602: The PCF sends policy control and charging (Policy Control and Charging, PCC) rules to the SMF, where the PCC rules may include fifth information. For example, the fifth information includes at least one of the following:
a purpose of monitoring congestion including performing congestion information exposure; and
third information, where the third information includes information for requesting reporting of a congestion situation.

Step 1603: The SMF sends the third information and first request information for requesting monitoring of congestion to the RAN. The first request information may be specifically embodied as including QoS parameters required to be monitored, and the QoS parameters required to be monitored include congestion information, and the third information is used for requesting reporting of information of a congestion situation.

Step 1604: The SMF sends second request information for requesting monitoring of congestion to a CN UP (UPF), where the second request information may be specifically embodied as including QoS parameters required to be monitored, and the QoS parameters required to be monitored include congestion information.

Step 1605: The RAN performs congestion monitoring.

Step 1606: The RAN reports, based on the third information, the information for describing a congestion situation to the CN UP (UPF).

Step 1607: The CN UP (UPF) discloses the information of a congestion situation through a service-oriented interface or an N4 interface.

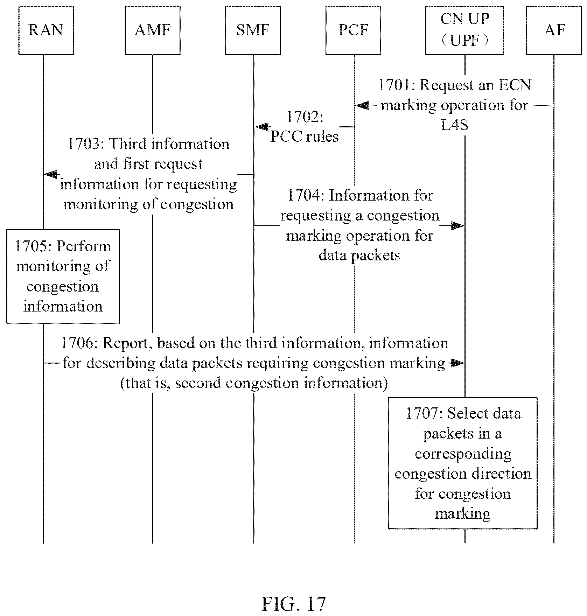

FIG. 17 shows another schematic flowchart of a congestion information manipulation method according to an embodiment of this application. In the flow shown in FIG. 17, first information sent by an SMF to a RAN includes third information, where the third information is used for requesting reporting of information of data packets requiring congestion marking, the RAN reports second congestion information based on the third information, and a UPF receives the second congestion information and performs congestion marking for data packets based on the second congestion information.

As shown in FIG. 17, the method mainly includes the following steps.

Step 1701: An AF requests an ECN marking operation for L4S from a PCF.

Step 1702: The PCF sends policy control and charging (Policy Control and Charging, PCC) rules to the SMF, where the PCC rules may include fourth information. For example, the fourth information includes at least one of the following:
a purpose of monitoring congestion, where the purpose of the monitoring congestion includes performing a congestion marking operation for data packets; and
third information, where the third information includes information for requesting reporting of information of data packets requiring congestion marking.

Step 1703: The SMF sends the third information and first request information for requesting monitoring of congestion to the RAN, where the first request information may be specifically embodied as including QoS parameters required to be monitored, and the QoS parameters required to be monitored include congestion information. The third information is used for requesting reporting of information of data packets requiring congestion marking.

Step 1704: The SMF sends information for requesting a congestion marking operation for data packets to a CN UP (UPF). For example, the congestion marking operation may be an ECN marking operation for L4S.

Step 1705: The RAN performs congestion monitoring.

Step 1706: The RAN reports, based on the third information, to the CN UP (UPF), information for describing data packets requiring congestion marking (that is, the second congestion information). Specifically, the second congestion information may be a percentage of data packets requiring congestion marking.

Step 1707: The CN UP (UPF) selects data packets in a corresponding congestion direction for congestion marking based on the received information for describing data packets requiring congestion marking.

Through the above technical solution provided by this embodiment of this application, the RAN may determine, based on the third information, information for requesting reporting of a congestion situation, or the information for requesting reporting of information of data packets requiring congestion marking that is sent by the SMF, whether to report information for describing a congestion situation or the information for describing data packets requiring congestion marking, and then report corresponding content, so that the UPF can know whether the received congestion information is the information for describing a congestion situation or the information for describing data packets requiring congestion marking, to perform a corresponding operation on the received congestion information.

FIG. 18 shows a schematic structural diagram of an apparatus for reporting congestion information according to an embodiment of this application. As shown in FIG. 18, the apparatus 1800 mainly includes: a first acquisition module 1801 and a first reporting module 1802.

The first acquisition module 1801 is configured to acquire first information, where the first information includes first request information for requesting monitoring of congestion. The first reporting module 1802 is configured to report first congestion information or second congestion information based on the first information, where the first congestion information is information for describing a congestion situation, and the second congestion information is information for describing data packets requiring congestion marking.

In an implementation, the first reporting module 1702 reporting the first congestion information or the second congestion information based on the first information includes: reporting the first congestion information or the second congestion information based on the first information and second information, where the second information includes at least one of the following: capability of a first communication device and a local policy of the first communication device.

In an implementation, the first request information includes one of the following: information for requesting monitoring of first congestion, where a purpose of the monitoring first congestion includes performing congestion information exposure; and information for requesting monitoring of second congestion, where a purpose of the monitoring second congestion includes performing a congestion marking operation for data packets.

In an implementation, the reporting the first congestion information or second congestion information based on the first request information includes: reporting the first congestion information in a case that the first request information includes the information for requesting monitoring of first congestion; and reporting the second congestion information in a case that the first request information includes the information for requesting monitoring of second congestion.

In an implementation, the first information further includes third information, where the third information is used for requesting reporting of at least one of the following: information of a congestion situation; and information of data packets requiring congestion marking.

In an implementation, the reporting the first congestion information or the second congestion information based on the first information includes one of the following:
reporting the first congestion information in a case that the third information includes information for requesting reporting of a congestion situation; and
reporting the second congestion information in a case that the third information includes information for requesting reporting of data packets requiring congestion marking.

FIG. 19 shows a schematic structural diagram of an apparatus for processing congestion information according to an embodiment of this application. As shown in FIG. 19, the apparatus 1900 includes: a first receiving module 1901 and a first execution module 1902.

The first receiving module 1901 is configured to receive first congestion information or second congestion information, where the first congestion information is information for describing a congestion situation, and the second congestion information is information for describing data packets requiring congestion marking. The first execution module 1902 is configured to perform at least one of the following: performing the first congestion information exposure or performing congestion marking for data packets based on the second congestion information; and ignoring the received first congestion information or ignoring the received second congestion information.

FIG. 20 shows a schematic structural diagram of an apparatus for processing congestion information according to an embodiment of this application. As shown in FIG. 20, the apparatus 2000 includes: a second acquisition module 2001 and a second reporting module 2002.

The second acquisition module 2001 is configured to acquire first information, where the first information includes first request information for requesting monitoring of congestion. The second reporting module 2002 is configured to report third congestion information based on the first information, where the third congestion information is percentage information corresponding to congestion information.

FIG. 21 shows a schematic structural diagram of an apparatus for processing congestion information according to an embodiment of this application. As shown in FIG. 21, the apparatus 2100 includes: a second receiving module 2101 and a first determining module 2102.

The second receiving module 2101 is configured to receive third congestion information, where the third congestion information is percentage information corresponding to congestion information. The first determining module 2102 is configured to interpret the third congestion information as one of the following: information for describing a congestion situation and a percentage of data packets requiring congestion marking in all data packets.

FIG. 22 shows a schematic structural diagram of an apparatus for processing congestion information according to an embodiment of this application. As shown in FIG. 22, the apparatus 2200 includes: a second execution module 2201.

The second execution module 2201 is configured to perform a third operation, where the third operation includes at least one of the following:
sending first information to a first communication device, where the first information includes at least one of the following: first request information for requesting monitoring of congestion and third information, where the third information is used for requesting reporting of one of the following: information of a congestion situation and information of data packets requiring congestion marking; and
sending fourth information to a second communication device, where the fourth information includes at least one of the following: second request information for requesting monitoring of congestion, information for requesting exposure of congestion information, and information for requesting a congestion marking operation for data packets.

FIG. 23 shows a schematic structural diagram of an apparatus for processing congestion information according to an embodiment of this application. As shown in FIG. 23, the apparatus 2300 includes: a third execution module 2301.

The third execution module 2301 is configured to perform a fourth operation, where the fourth operation includes at least one of the following:
sending fifth information to a third communication device, where the fifth information includes at least one of the following:
information for requesting monitoring of congestion, where
a purpose of the monitoring congestion includes at least one of the following: performing congestion information exposure and performing a congestion marking operation for data packets;
information for requesting monitoring of first congestion, where a purpose of the monitoring first congestion includes performing congestion information exposure; and
information for requesting monitoring of second congestion, where a purpose of the monitoring second congestion includes performing a congestion marking operation for data packets.

As shown in FIG. 24, an embodiment of this application further provides a communication device 2400 including a processor 2401 and a memory 2402, where the memory 2402 stores a program or instructions capable of running on the processor 2401, and when the program or instructions are executed by the processor 2401, the steps of any one of the foregoing congestion information manipulation method embodiments are implemented, with the same technical effects achieved. To avoid repetition, details are not described herein again.

An embodiment of this application further provides a network-side device including a processor and a communication interface, where the communication interface is coupled to the processor, and the processor is configured to execute a program or instructions to implement the steps of the method embodiments shown in FIG. 4 to FIG. 17. This network-side device embodiment corresponds to the foregoing network-side device method embodiments. All processes and implementations in the foregoing method embodiments are applicable to this network-side device embodiment, with the same technical effects achieved.

Specifically, an embodiment of this application further provides a network-side device. As shown in FIG. 25, the network-side device 2500 includes an antenna 2501, a radio frequency apparatus 2502, a baseband apparatus 2503, a processor 2504, and a memory 2505. The antenna 2501 is connected to the radio frequency apparatus 2502. In an uplink direction, the radio frequency apparatus 2502 receives information through the antenna 2501, and sends the received information to the baseband apparatus 2503 for processing. In a downlink direction, the baseband apparatus 2503 processes to-be-sent information, and sends the information to the radio frequency apparatus 2502; and the radio frequency apparatus 2502 processes the received information and then sends the information out through the antenna 2501.

The methods executed by the network-side device in the foregoing embodiments may be implemented on the baseband apparatus 2503. The baseband apparatus 2503 includes a baseband processor.

The baseband apparatus 2503 may include, for example, at least one baseband board, where a plurality of chips are disposed on the baseband board. As shown in FIG. 25, one of the chips is, for example, a baseband processor, and is connected to the memory 2505 through a bus interface, to invoke a program in the memory 2505 to perform the operations of the network device shown in the foregoing method embodiments.

The network-side device may further include a network interface 2506, where the interface is, for example, a common public radio interface (Common Public Radio Interface, CPRI).

Specifically, the network-side device 2500 in this embodiment of this application further includes: instructions or a program stored in the memory 2505 and capable of running on the processor 2504. The processor 2504 invokes the instructions or program in the memory 2505 to perform the methods executed by the modules shown in FIG. 18 to FIG. 23, with the same technical effects achieved. To avoid repetition, details are not described herein again.

An embodiment of this application further provides a readable storage medium. The readable storage medium stores a program or instructions, and when the program or instructions are executed by a processor, the steps of the foregoing congestion information manipulation method embodiments are implemented, with the same technical effects achieved. To avoid repetition, details are not described herein again.

The processor is a processor in the terminal described in the foregoing embodiment. The readable storage medium includes a computer-readable storage medium, for example, a computer read-only memory ROM, a random access memory RAM, a magnetic disk, or an optical disc. In some examples, the readable storage medium may be a non-transient readable storage medium.

An embodiment of this application further provides a chip. The chip includes a processor and a communication interface, where the communication interface is coupled to the processor, and the processor is configured to execute a program or instructions to implement the steps of the foregoing congestion information manipulation method embodiments, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program or a program product, where the computer program or the program product is stored in a storage medium, and the computer program or the program product is executed by at least one processor to implement the steps of the foregoing congestion information manipulation method embodiments, with the same technical effects achieved. To avoid repetition, details are not described herein again.

An embodiment of this application further provides a congestion information manipulation system. The system includes a first communication device, a second communication device, a third communication device, and a fourth communication device, where the first communication device may be configured to perform the foregoing congestion information manipulation method, the second communication device may be configured to perform the foregoing congestion information manipulation method, the third communication device may be configured to perform the foregoing congestion information manipulation method, and the fourth communication device may be configured to perform the foregoing congestion information manipulation method.

It should be noted that in this specification, the terms "include", "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element.

Based on the foregoing description of the embodiments, persons skilled in the art can clearly understand that the methods in the foregoing embodiments can be implemented through software on a necessary hardware platform or certainly through hardware only, but in many cases, the former is the more preferred implementation. Based on such an understanding, the technical solutions of this application essentially, or the part contributing to the prior art may be implemented in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A congestion information manipulation method, comprising:
acquiring, by a first communication device, first information, wherein the first information comprises first request information for requesting monitoring of congestion; and
reporting, by the first communication device, first congestion information or second congestion information based on the first information, wherein the first congestion information is information for describing a congestion situation, and the second congestion information is information for describing data packets requiring congestion marking.

2. The method according to claim 1 or 2, wherein the reporting, by the first communication device, first congestion information or second congestion information based on the first information comprises:
reporting, by the first communication device, the first congestion information or the second congestion information based on the first information and second information, wherein
the second information comprises at least one of the following: capability of the first communication device and a local policy of the first communication device.

3. The method according to claim 1 or 2, wherein the first request information comprises one of the following:
information for requesting monitoring of congestion;
information for requesting monitoring of first congestion, wherein a purpose of the monitoring first congestion comprises performing congestion information exposure; and
information for requesting monitoring of second congestion, wherein a purpose of the monitoring second congestion comprises performing congestion marking for data packets.

4. The method according to claim 3, wherein the reporting, by the first communication device, first congestion information or second congestion information based on the first request information comprises one of the following:
reporting, by the first communication device, the first congestion information in a case that the first request information comprises the information for requesting monitoring of first congestion;
reporting, by the first communication device, the second congestion information in a case that the first request information comprises the information for requesting monitoring of second congestion;
reporting, by the first communication device, the first congestion information in a case that the first request information comprises information for requesting monitoring of congestion and a purpose of the monitoring congestion comprises performing congestion information exposure; and
reporting, by the first communication device, the second congestion information in a case that the first request information comprises information for requesting monitoring of congestion and a purpose of the monitoring congestion comprises performing congestion marking for data packets.

5. The method according to claim 1 or 2, wherein the first information further comprises one of the following indications: third information and information for indicating a purpose of monitoring congestion,
wherein
the information for indicating a purpose of monitoring congestion comprises at least one of the following: performing congestion information exposure and performing congestion marking for data packets; and
the third information is used for reporting at least one of the following:
information of a congestion situation; and
information of data packets requiring congestion marking.

6. The method according to claim 5, wherein the reporting, by the first communication device, first congestion information or second congestion information based on the first information comprises one of the following:
reporting, by the first communication device, the first congestion information in a case that the third information comprises information for requesting reporting of a congestion situation; and
reporting, by the first communication device, the second congestion information in a case that the third information comprises information for requesting reporting of data packets requiring congestion marking.

7. A congestion information manipulation method, comprising:
receiving, by a second communication device, first congestion information or second congestion information, wherein the first congestion information is information for describing a congestion situation, and the second congestion information is information for describing data packets requiring congestion marking; and
performing, by the second communication device, at least one of the following:
performing the first congestion information exposure or performing congestion marking for data packets based on the second congestion information; and
ignoring the received first congestion information or ignoring the received second congestion information.

8. The method according to claim 7, wherein the ignoring, by the second communication device, the received first congestion information comprises:
ignoring, by the second communication device, the received first congestion information in a case that a first condition is satisfied, wherein the first condition comprises at least one of the following:
the second communication device has not acquired second request information for requesting monitoring of congestion;
the second communication device has not acquired information for requesting exposure of congestion information;
the second communication device has acquired information for requesting a congestion marking operation for data packets; and
the first congestion information is first congestion information corresponding to a first QoS flow, wherein at least one of the following does not exist for the first QoS flow: second request information for requesting monitoring of congestion corresponding to the first QoS flow.

9. The method according to claim 7, wherein the ignoring, by the second communication device, the received second congestion information comprises:
the ignoring, by the second communication device, the received second congestion information in a case that a second condition is satisfied, wherein the second condition comprises at least one of the following:
the second communication device has not acquired information for requesting a congestion marking operation for data packets;
the second communication device has acquired information for requesting exposure of congestion information;
the second communication device has acquired second request information for requesting monitoring of congestion; and
the first congestion information is second congestion information corresponding to a first QoS flow, wherein information for requesting a congestion marking operation for data packets of the first QoS flow does not exist for the first QoS flow.

10. The method according to claim 8 or 9, wherein a purpose of the monitoring congestion comprises performing congestion information exposure and performing congestion marking for data packets.

11. A congestion information manipulation method, comprising:
acquiring, by a first communication device, first information, wherein the first information comprises first request information for requesting monitoring of congestion; and
reporting, by the first communication device, third congestion information based on the first information, wherein
the third congestion information is percentage information corresponding to congestion information.

12. The method according to claim 11, wherein the percentage information corresponding to congestion information is used for indicating at least one of the following: a congestion situation and a percentage of data packets requiring congestion marking in all data packets.

13. The method according to claim 11 or 12, wherein the percentage information corresponding to the congestion information is used for indicating both a congestion situation and a percentage of data packets requiring congestion marking in all data packets.

14. A congestion information manipulation method, comprising:
receiving, by a second communication device, third congestion information, wherein the third congestion information is percentage information corresponding to congestion information; and
interpreting, by the second communication device, the third congestion information as one of the following: information for describing a congestion situation and a percentage of data packets requiring congestion marking in all data packets.

15. The method according to claim 14, wherein the interpreting, by the second communication device, the third congestion information as information for describing a congestion situation comprises:
in a case that a third condition is satisfied, interpreting, by the second communication device, the third congestion information as the information for describing a congestion situation, wherein
the third condition comprises at least one of the following:
the second communication device has acquired second request information for requesting monitoring of congestion; and
the third congestion information is third congestion information corresponding to a first QoS flow, wherein at least one of the following exists for the first QoS flow: second request information for requesting monitoring of congestion corresponding to the first QoS flow; and information for requesting exposure of congestion information corresponding to the first QoS flow.

16. The method according to claim 14, wherein the interpreting, by the second communication device, the third congestion information as one of the following: information for describing a congestion situation and a percentage of data packets requiring congestion marking in all data packets comprises:
in a case that a fourth condition is satisfied, interpreting, by the second communication device, the third congestion information as the percentage of data packets requiring congestion marking in all data packets, wherein
the fourth condition comprises at least one of the following:
the second communication device has acquired information for requesting a congestion marking operation for data packets; and
the third congestion information is third congestion information corresponding to a first QoS flow, wherein information for requesting a congestion marking operation for data packets of the first QoS flow exists for the first QoS flow.

17. A congestion information manipulation method, comprising:
performing, by a third communication device, a third operation, wherein the third operation comprises at least one of the following:
sending first information to a first communication device, wherein the first information comprises at least one of the following: first request information for requesting monitoring of congestion, third information, and information for indicating a purpose of monitoring congestion; wherein the third information is used for requesting reporting of one of the following: information of a congestion situation and information of data packets requiring congestion marking; and the information for indicating a purpose of monitoring congestion comprises at least one of the following: performing congestion information exposure and performing congestion marking for data packets; and
sending fourth information to a second communication device, wherein the fourth information comprises at least one of the following: second request information for requesting monitoring of congestion, information for requesting exposure of congestion information, and information for requesting a congestion marking operation for data packets.

18. The method according to claim 17, wherein the performing, by a third communication device, a third operation comprises:
in a case that a fifth condition is satisfied, performing, by the third communication device, at least one of the following:
sending the first request information for requesting monitoring of congestion to the first communication device;
sending the third information for requesting reporting of the information of a congestion situation to the first communication device;
sending to the first communication device the information for indicating a purpose of monitoring congestion, wherein the purpose comprises performing congestion information exposure; and
sending the second request information for requesting monitoring of congestion to the second communication device; wherein
the fifth condition comprises at least one of the following:
acquisition of a request for performing congestion information exposure;
acquisition of a request for subscription to congestion information;
acquisition of information for requesting monitoring of congestion, wherein a purpose of the monitoring congestion comprises performing congestion information exposure; and
acquisition of information for requesting monitoring of first congestion, wherein a purpose of the monitoring first congestion comprises performing congestion information exposure.

19. The method according to claim 18, wherein the first request information or the second request information comprises: the information for requesting monitoring of first congestion, wherein the purpose of the monitoring first congestion comprises performing monitored congestion information exposure.

20. The method according to claim 17, wherein the performing, by a third communication device, a third operation further comprises:
in a case that a sixth condition is satisfied, performing, by the third communication device, at least one of the following:
sending the first request information for requesting indication of monitoring of congestion to the first communication device;
sending the third information for requesting reporting of the information of data packets requiring congestion marking to the first communication device;
sending to the first communication device the information for indicating a purpose of monitoring congestion, wherein the purpose comprises performing congestion marking for data packets; and
sending the information for requesting a congestion marking operation for data packets to the second communication device;
wherein
the sixth condition comprises at least one of the following:
acquisition of a request for performing a congestion marking operation for data packets;
acquisition of information for requesting monitoring of congestion, wherein a purpose of the monitoring congestion comprises performing a congestion marking operation for data packets; and
acquisition of information for requesting monitoring of second congestion, wherein a purpose of the monitoring second congestion comprises performing a congestion marking operation for data packets.

21. The method according to claim 20, wherein the first request information and/or the information for requesting a congestion marking operation for data packets comprises at least one of the following:
the information for requesting monitoring of second congestion, wherein the purpose of the monitoring second congestion comprises performing a congestion marking operation for data packets; and
the information for requesting monitoring of congestion.

22. The method according to claim 17, wherein the performing, by a third communication device, a third operation comprises:
acquiring fifth information and performing the third operation based on the fifth information, wherein
the fifth information comprises at least one of the following:
information for requesting monitoring of congestion;
information for indicating a purpose of monitoring congestion, comprising at least one of the following: performing congestion information exposure and performing a congestion marking operation for data packets;
information for requesting monitoring of first congestion, wherein a purpose of the monitoring first congestion comprises performing congestion information exposure;
information for requesting monitoring of second congestion, wherein a purpose of the monitoring second congestion comprises performing a congestion marking operation for data packets; and
third information for requesting reporting of at least one of the following: information of a congestion situation and information of data packets requiring congestion marking; and
information for requesting a congestion marking operation for data packets.

23. A congestion information manipulation method, comprising:
performing, by a fourth communication device, a fourth operation, wherein the fourth operation comprises: sending fifth information to a third communication device, wherein the fifth information comprises at least one of the following:
information for requesting monitoring of congestion;
information for indicating a purpose of monitoring congestion, comprising at least one of the following: performing congestion information exposure and performing a congestion marking operation for data packets;
information for requesting monitoring of first congestion, wherein a purpose of the monitoring first congestion comprises performing congestion information exposure;
information for requesting monitoring of second congestion, wherein a purpose of the monitoring second congestion comprises performing a congestion marking operation for data packets; and
third information for requesting reporting of at least one of the following: information of a congestion situation and information of data packets requiring congestion marking; and
information for requesting a congestion marking operation for data packets.

24. The method according to claim 23, wherein the performing, by a fourth communication device, a fourth operation comprises:
performing, by the fourth communication device, the fourth operation in a case that a seventh condition is satisfied, wherein
the seventh condition comprises: a local policy of the fourth communication device requests execution of the fourth operation.

25. The method according to claim 24, wherein the seventh condition further comprises at least one of the following:
acquisition of a request for performing congestion information exposure;
acquisition of a request for subscription to congestion information;
acquisition of support of a first data flow for congestion marking operations; and
acquisition of a request for performing a congestion marking operation for data packets of the first data flow.

26. The method according to claim 23, wherein the performing, by a fourth communication device, a fourth operation comprises:
sending fifth information to a third communication device in a case that an eighth condition is satisfied, wherein the fifth information comprises at least one of the following:
information for requesting monitoring of congestion;
wherein
a purpose of the monitoring congestion comprises performing congestion information exposure;
information for requesting monitoring of first congestion, wherein a purpose of the monitoring first congestion comprises performing congestion information exposure; and
third information for requesting reporting of information of a congestion situation; wherein
the eighth condition comprises:
acquisition of a request for performing congestion information exposure or a request for subscription to congestion information.

27. The method according to claim 23, wherein the performing, by a fourth communication device, a fourth operation comprises:
sending fifth information to a third communication device in a case that a ninth condition is satisfied, wherein the fifth information comprises at least one of the following:
information for requesting monitoring of congestion, wherein a purpose of the monitoring congestion comprises performing a congestion marking operation for data packets;
information for requesting monitoring of second congestion, wherein a purpose of the monitoring second congestion comprises performing a congestion marking operation for data packets; and
third information for requesting reporting of information of data packets requiring congestion marking; and
information for requesting a congestion marking operation for data packets; wherein
the ninth condition comprises at least one of the following:
acquisition of support of a first data flow for congestion marking operations; and
acquisition of a request for performing a congestion marking operation for data packets of the first data flow.

28. A congestion information manipulation apparatus, comprising:
a first acquisition module, configured to acquire first information, wherein the first information comprises first request information for requesting monitoring of congestion; and
a first reporting module, configured to report first congestion information or second congestion information based on the first information, wherein the first congestion information is information for describing a congestion situation, and the second congestion information is information for describing data packets requiring congestion marking.

29. A congestion information manipulation apparatus, comprising:
a first receiving module, configured to receive first congestion information or second congestion information, wherein the first congestion information is information for describing a congestion situation, and the second congestion information is information for describing data packets requiring congestion marking; and
a first execution module, configured to perform at least one of the following:
performing the first congestion information exposure or performing congestion marking for data packets based on the second congestion information; and
ignoring the received first congestion information or ignoring the received second congestion information.

30. A congestion information manipulation apparatus, comprising:
a second acquisition module, configured to acquire first information, wherein the first information comprises first request information for requesting monitoring of congestion; and
a second reporting module, configured to report third congestion information based on the first information, wherein the third congestion information is percentage information corresponding to congestion information.

31. A congestion information manipulation apparatus, comprising:
a second receiving module, configured to receive third congestion information, wherein the third congestion information is percentage information corresponding to congestion information; and
a first determining module, configured to interpret the third congestion information as one of the following: information for describing a congestion situation and a percentage of data packets requiring congestion marking in all data packets.

32. A congestion information manipulation apparatus, comprising:
a second execution module, configured to perform a third operation, wherein the third operation comprises at least one of the following:
sending first information to a first communication device, wherein the first information comprises at least one of the following: first request information for requesting monitoring of congestion and third information, wherein the third information is used for requesting reporting of one of the following: information of a congestion situation and information of data packets requiring congestion marking; and
sending fourth information to a second communication device, wherein the fourth information comprises at least one of the following: second request information for requesting monitoring of congestion, information for requesting exposure of congestion information, and information for requesting a congestion marking operation for data packets.

33. A congestion information manipulation apparatus, comprising:
a third execution module, configured to perform a fourth operation, wherein the fourth operation comprises at least one of the following:
sending fifth information to a third communication device, wherein the fifth information comprises at least one of the following:
information for requesting monitoring of congestion, wherein
a purpose of the monitoring congestion comprises at least one of the following: performing congestion information exposure and performing a congestion marking operation for data packets;
information for requesting monitoring of first congestion, wherein a purpose of the monitoring first congestion comprises performing congestion information exposure; and
information for requesting monitoring of second congestion, wherein a purpose of the monitoring second congestion comprises performing a congestion marking operation for data packets.

34. A communications device, comprising a processor, a memory, and a computer program stored in the memory and capable of running on the processor, wherein when the computer program is executed by the processor, the steps of the congestion information manipulation method according to any one of claims 1 to 27 are implemented.

35. A computer-readable storage medium, wherein a computer program is stored in the computer-readable storage medium, and when the computer program is executed by a processor, the steps of the congestion information manipulation method according to any one of claims 1 to 27 are implemented.

36. A computer program product, wherein the computer program product is stored in a storage medium, and the computer program product is executed by at least one processor to implement the congestion information manipulation method according to any one of claims 1 to 27.

37. A chip, wherein the chip comprises a processor and a communication interface, wherein the communication interface is coupled to the processor, and the processor is configured to execute a program or instructions to implement the congestion information manipulation method according to any one of claims 1 to 27.
